(19) Europäisches Patentamt
European Patent Office
Office européen des brevets

(11) **EP 3 473 939 B1**

(12) **EUROPÄISCHE PATENTSCHRIFT**

(45) Veröffentlichungstag und Bekanntmachung des Hinweises auf die Patenterteilung:
**15.09.2021 Patentblatt 2021/37**

(51) Int Cl.:
*F24D 19/10* *(2006.01)* *G05D 23/19* *(2006.01)*

(21) Anmeldenummer: **18199316.3**

(22) Anmeldetag: **09.10.2018**

(54) **VERFAHREN ZUM BETREIBEN EINER HEIZUNGSANLAGE UND HEIZUNGSANLAGE**

METHOD FOR OPERATING A HEATING ASSEMBLY AND HEATING ASSEMBLY

PROCÉDÉ DE FONCTIONNEMENT D'UNE INSTALLATION DE CHAUFFAGE ET INSTALLATION DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2017 DE 102017218139**

(43) Veröffentlichungstag der Anmeldung:
**24.04.2019 Patentblatt 2019/17**

(73) Patentinhaber: **Viessmann Climate Solutions SE**
**35108 Allendorf (DE)**

(72) Erfinder: **Faßnacht, Tillman**
**72663 Großbettlingen (DE)**

(74) Vertreter: **MERH-IP Matias Erny Reichl Hoffmann Patentanwälte PartG mbB**
**Paul-Heyse-Strasse 29**
**80336 München (DE)**

(56) Entgegenhaltungen:
**EP-A1- 0 864 955** **EP-A2- 1 936 288**
**WO-A2-03/052536** **DE-A1- 10 044 734**
**DE-A1-102012 002 941** **DE-B3-102015 121 418**
**DE-U1-202012 012 915**

# EP 3 473 939 B1

**Beschreibung**

Die vorliegende Erfindung betrifft ein Verfahren zum Betreiben einer Heizungsanlage in einem Gebäude sowie eine Heizungsanlage. Insbesondere soll ein Verfahren zur dynamischen Referenzraumregelung einer Heizungsanlage angegeben werden.

Üblicherweise wird die Vorlauftemperatur eines in einer Heizungsanlage bereitgestellten wärmeführenden Mediums in Abhängigkeit einer gemessenen Außentemperatur (witterungsgeführte Vorlauftemperaturregelung) oder in Abhängigkeit einer Raumtemperatur eines Referenzraums (Referenzraumregelung) bestimmt. Die Witterungsführung hat den möglichen Nachteil, dass die Vorlauftemperatur nur in Abhängigkeit der Außentemperatur eingestellt wird aber keine Rückmeldung des Gebäudes vorliegt. Dann kann beispielsweise nicht erkannt werden, wenn eine zu hohe Heizkurve eingestellt ist, so dass stets eine unnötig hohe Vorlauftemperatur bereitgestellt wird. Darüber hinaus ist es hierbei in der Regel nicht vorgesehen, innere und äußere Fremdenergieeinträge beim Bestimmen der Vorlaufsolltemperatur zu berücksichtigten. Die witterungsgeführte Vorlauftemperaturregelung kann also einen zu hohen Energieverbrauch begünstigen.

Bei der Referenzraumregelung wird die Vorlauftemperatur des wärmeführenden Mediums in Abhängigkeit von Zustandsparametern, beispielsweise einer Raumisttemperatur eines vorab festgelegten Referenzraums bestimmt. Ein möglicher Nachteil dieses Verfahrens kann dann auftreten, wenn der festgelegte Referenzraum nicht der thermisch-hydraulisch ungünstigste Raum im Gebäude ist. Thermisch-hydraulisch ungünstig heißt, dass die Wärmeverluste des Raumes in Relation zur installierten Heizleistung besonders hoch sind, beziehungsweise, dass der Raum schlechter als andere mit dem wärmeführenden Medium versorgt wird, weil beispielsweise der hydraulische Widerstand der Leitungen, die das wärmeführenden Medium von einem Wärmeerzeuger zu einem Heizkörper im Referenzraum führen, vergleichsweise groß ist. Wird ein thermisch-hydraulisch besonders günstiger Raum als Referenzraum festgelegt, kann dies zur Folge haben, dass andere Räume nur unzureichend mit Wärme versorgt werden, so dass nicht alle Räume auf eine jeweils vorgegebene Raumsolltemperatur aufgeheizt werden können.

Die europäische Patentanmeldung EP 0864955 A1 beschreibt eine Heizungsanlage mit einem Heizgerät, das durch ein Steuergerät beeinflusst wird. Eine Einzelraumtemperaturregelung wird mittels motorisch verstellbarer Heizkörperventile erreicht, die durch Raumtemperaturregler beeinflusst werden. Die Vorlauftemperatur wird in Abhängigkeit der Raumtemperatur mittels des Steuergeräts an den Wärmebedarf angepasst.

Aus der internationalen Patentanmeldung WO 03/052536 A2 ist ein Verfahren zum Regeln von Heizungsanlagen bekannt, bei dem die Vorlauftemperatur und/oder der Massenstrom variiert wird. In den Räumen eines Gebäudes sind als Einzelraumregelungen dienende Raumtemperaturregelungen vorgesehen, die durch Verstellen der Hubposition von Stellventilen der Heizelemente die in den Räumen gewünschte Temperatur einstellen.

Ein weiteres bekanntes Verfahren, das insbesondere beim Betreiben von Flächenheizungen, wie zum Beispiel einer Fußbodenheizung zum Einsatz kommt, ist die Einzelraumregelung mittels Raumthermostaten. Über die Raumthermostaten kann für jeden einzelnen Raum eine Raumsolltemperatur vorgegeben werden. Beispielsweise offenbart die Offenlegungsschrift DE 100 447 34 A1 eine Anordnung zur Anpassung eines Heizgerätes an den tatsächlichen Wärmebedarf. Innerhalb mehrerer Räume ist eine Einzelraumregelung über Heizkörperthermostatventile vorgesehen. Die Vorlauftemperatur der Heizung wird durch eine Steuerung beziehungsweise eine Regelung eines Wärmeerzeugers bestimmt.

Bei der Einzelraumregelung wird die Raumtemperatur in jedem beheizbaren Raum eines Gebäudes durch einstellen von Stellgliedöffnungen in Stellgliedern, zum Beispiel Raumthermostaten, von Heizkörpern durch Einzelraumregler auf einen globalen oder separat einstellbaren Raumtemperatursollwert geregelt. Über die Stellglieder können die Einzelraumregler beispielsweise einen Massenstrom eines Heizmediums durch die jeweiligen Heizkörper einstellen. Hierbei ist jedoch in der Regel keine Rückmeldung der Einzelraumregler auf die Vorlauftemperatur vorgesehen.

Um die oben genannten Nachteile und Probleme der herkömmlichen Verfahren zu lösen, wird ein Verfahren zum Betreiben einer Heizungsanlage in einem Gebäude vorgeschlagen, bei dem Aspekte einer Einzelraumregelung mit Aspekten einer Referenzraumregelung zu einer dynamischen Referenzraumregelung kombiniert werden. Hierbei ist der Referenzraum nicht fest vorgegeben, sondern wird dynamisch in Abhängigkeit von Stellgrößen der Einzelraumregler bestimmt.

Die Erfindung betrifft ein Verfahren zum Betreiben einer Heizungsanlage in einem Gebäude mit mindestens einem beheizbaren Raum. Obwohl das Verfahren im Folgenden anhand einer Heizungsanlage zum Heizen von Räumen eines Gebäudes beschrieben wird, kann das Verfahren allgemein auch auf eine HLKK-Anlage (Anlage der Heizungs-, Lüftungs-, Klima- und Kältetechnik), zum Beispiel eine Klimaanlage zum Kühlen von Räumen, angewendet werden. Der Begriff "Heizkörper" kann dann entsprechend durch einen Kühlkörper beziehungsweise ein Lüftungsaggregat ersetzt werden.

Die Erfindung betrifft außerdem eine Heizungsanlage in einem Gebäude mit mindestens einem beheizbaren Raum. Die Heizungsanlage ist konfiguriert, das erfindungsgemäße Verfahren auszuführen.

Erfindungsgemäß umfasst die Heizungsanlage mindestens einen Heizkörper pro beheizbaren Raum, insgesamt also mindestens einen oder mehr Heizkörper, die in separaten Räumen angeordnet sein können. Das Gebäude kann mehr als einen beheizbaren Raum sowie einen oder mehr nicht beheizbare Räume umfassen. Ein beheizbarer Raum kann mehr als ein Heizkörper zum Heizen des Raumes aufweisen.

Die Heizungsanlage umfasst ferner mindestens einen Wärmeerzeuger zum Erhitzen eines fluiden wärmeführenden Mediums (Trägermedium). Bei dem Wärmeerzeuger kann es sich beispielsweise um einen üblichen Heizkessel handeln, der mit einem Brennstoff wie zum Beispiel Gas, Öl, Kohle oder Holz betrieben wird. Die Heizungsanlage kann als Wärmeerzeuger auch einen Solarkollektor und/oder eine Wärmepumpe, ein Blockheizkraftwerk oder einen sonstigen Wärmeerzeuger aufweisen. Wird das Verfahren auf eine Klimaanlage zum Kühlen beziehungsweise Lüften angewendet, ist der Wärmeerzeuger entsprechend durch einen Kälteerzeuger beziehungsweise einen Luftstromerzeuger zu ersetzen und in den Räumen sind zusätzlichen zu den Heizkörpern oder anstatt der Heizkörper entsprechend Kühlkörper beziehungsweise Luftauslässe angeordnet. In alternativen Ausführungen kann auch eine Flächenheizung zum Heizen und/oder Kühlen eines Raumes verwendet werden.

Das fluide Wärmeträgermedium kann zum Beispiel eine Flüssigkeit wie Wasser oder ein Gas oder Gasgemisch wie zum Beispiel Luft sein. Das Trägermedium fließt vom mindestens einen Wärmeerzeuger über mindestens einen Vorlauf zu den Heizkörpern und von den Heizkörpern über mindestens einen Rücklauf zurück zum mindestens einen Wärmeerzeuger. Dabei transportiert das Trägermedium Wärme zu den Heizkörpern und gibt diese an den zu beheizenden Raum ab. Zum Fördern des Trägermediums ist im Vorlauf und/oder im Rücklauf mindestens eine Pumpe angeordnet. Die Pumpe kann auch im Wärmeerzeuger oder in den Heizkörpern angeordnet sein. Die Heizungsanlage kann mehrere Heizkreise umfassen. Entsprechend können auch mehrere Pumpen, zum Beispiel eine Pumpe pro Heizkreis, vorgesehen sein. Zum Ermitteln einer Vorlauftemperatur des Trägermediums ist im Vorlauf ein Temperatursensor angeordnet.

Ein Heizkörper ist dazu ausgelegt, die vom Trägermedium transportierte Wärme an den Raum abzugeben. Die von einem Heizkörper abgegebene Heizleistung hängt im Allgemeinen von dessen Oberfläche, von der Temperatur des Trägermediums und vom Volumenstrom beziehungsweise Massenstrom des Trägermediums durch den Heizkörper ab. Ein Heizkörper kann beispielsweise ein Wandheizkörper, wie zum Beispiel ein Radiator, ein Konvektor, ein Gliederheizkörper oder ein Flächenheizkörper, sein. Ein Heizkörper kann aber auch ein Element einer Fußbodenheizung und/oder Wandheizung sein.

Jeder Heizkörper umfasst ein Stellglied zum Einstellen eines Volumenstroms beziehungsweise Massenstroms durch den Heizkörper. Ein solches Stellglied kann zum Beispiel als Ventil ausgeführt sein, über dessen Ventilhub der Volumenstrom (oder Massenstrom) durch den Heizkörper eingestellt werden kann. Das Stellglied kann insbesondere einen elektrisch steuerbaren Aktor umfassen. Der Aktor kann beispielsweise ein Elektromotor sein. Alternativ kann auch pro Heizkörper eine Pumpe als Stellglied zum Einstellen des Massenstroms oder Volumenstroms durch den Heizkörper vorgesehen sein. Durch Einstellen der Förderleistung der Pumpe kann somit der Massenstrom oder Volumenstrom durch den Heizköper bestimmt werden.

Somit kann als Stellgröße zum Regeln der Raumtemperatur entweder ein Öffnungsgrad eines Ventils oder eine Förderleistung einer Pumpe verwendet werden.

Die eingestellte Stellgliedöffnung bestimmt den Volumenstrom beziehungsweise Massenstrom durch den jeweiligen Heizkörper. Je weiter ein Stellglied geöffnet ist, desto größer ist der Volumenstrom beziehungsweise Massenstrom. Ein Stellglied kann auch konfiguriert sein, ausschließlich die Zustände voll geschlossen oder voll geöffnet anzunehmen. Die Stellgliedöffnung kann dann beispielsweise (als zeitliches Mittel) einer zeitlichen Variation des geöffneten und geschlossenen Zustands beeinflusst werden.

Die Heizungsanlage kann ferner eine Einstelleinrichtung umfassen, wobei pro Raum mindestens eine Einstelleinrichtung vorgesehen ist, die dem einen Heizkörper oder den mehreren Heizkörpern des Raumes zugeordnet ist, und zum Einstellen deren Stellglieder konfiguriert ist. Über die Einstelleinrichtung kann insbesondere eine Raumsolltemperatur für den Raum vorgegeben werden. Dazu kann die Einstelleinrichtung eine geeignete Benutzerschnittstelle beziehungsweise ein geeignetes Bedienelement aufweisen.

Jede Einstelleinrichtung kann ferner eine Kommunikationseinrichtung zum Kommunizieren mit einer zentralen Regeleinrichtung der Heizungsanlage aufweisen. Die Kommunikation kann drahtgebunden oder drahtlos erfolgen. Die zentrale Regeleinrichtung regelt oder steuert den Wärmeerzeuger (WE), um die Vorlauftemperatur des Trägermediums auf eine Vorlaufsolltemperatur einzustellen. Zum Regeln des Wärmeerzeugers und/oder der Pumpe kann die zentrale Regeleinrichtung mehrere voneinander getrennte Regler aufweisen. Ferner kann die zentrale Regeleinrichtung konfiguriert sein, Einstellungen an der mindestens einen Einstelleinrichtung vorzunehmen. Beispielsweise kann die Regeleinrichtung konfiguriert sein, Grenzwertvorgaben oder Regelparameter für die Raumtemperaturregler an die mindestens eine Einstelleinrichtung zu übertragen beziehungsweise Stellgrade für die Stellglieder vorgeben. Die Grenzwerte können von der zentralen Regeleinrichtung in Abhängigkeit von Parametern bestimmt werden, die von der mindestens einen Einstelleinrichtung an die zentrale Regeleinrichtung übertragen werden. Im Folgenden wird ein solches Verfahren beschrieben.

Die Einstelleinrichtungen der einzelnen Räume können vorzugsweise untereinander vernetzt sein, um Daten auszutauschen oder an die zentrale Regeleinrichtung weiterzuleiten. Die zentrale Regeleinrichtung kann insbesondere auch ein Bestandteil des Wärmeerzeugers sein, beziehungsweise einzelne Funktionen, wie zum Beispiel die Steuerung oder Regelung der Pumpe können in einer Regelung oder Steuerung des Wärmeerzeugers implementiert sein.

Ferner kann auch die zentrale Regeleinrichtung eine geeignete Benutzerschnittstelle aufweisen, über die für jeden Raum oder auch für mehrere Räume gleichzeitig eine Raumsolltemperatur vorgegeben werden kann. Die zentrale Regeleinrichtung und/oder die Einstelleinrichtungen können alternativ oder zusätzlich auch über eine Smartphone-App steuerbar sein. Über einen externen im Raum angeordneten oder einen intern in der Einstelleinrichtung angeordneten Temperatursensor kann eine aktuelle Raumisttemperatur erfasst werden.

Die Heizungsanlage, insbesondere die Einstelleinrichtung oder die zentrale Regeleinrichtung, umfasst mindestens einen Raumtemperaturregler zum Einstellen einer Stellgliedöffnung des Stellglieds beziehungsweise der Stellglieder der im mindestens einen beheizbaren Raum angeordneten Heizkörper oder des im Raum angeordneten Heizkörpers in Abhängigkeit einer vorgegebenen Raumsolltemperatur und einer anhand des Temperatursensors erfassten Raumisttemperatur. Bei mehreren beheizbaren Räumen kann die Heizungsanlage für jeden Raum jeweils einen Raumtemperaturregler umfassen.

Der Raumtemperaturregler kann eine Regelelektronik aufweisen, die in Abhängigkeit von Regelparametern und/oder Messwerten und/oder Sollwerten geeignete Regelsignale erzeugt und an das Stellglied ausgibt. Beispielsweise kann der Raumtemperaturregler als Mikrocontroller mit PI-Regler oder PID-Regler ausgeführt sein. Der Raumtemperaturregler ist konfiguriert, den Öffnungsgrad des Stellglieds in Abhängigkeit einer jeweils vorgegebenen Raumsolltemperatur und der erfassten Raumisttemperatur einzustellen, so dass der Raumtemperaturregler die Raumisttemperatur auf die Raumsolltemperatur regelt. Der Öffnungsgrad des Stellglieds ist somit die Stellgröße und die Raumtemperatur ist die Regelgröße.

Erfindungsgemäß umfasst das Verfahren die folgenden Schritte: Zunächst wird der Wärmeerzeuger bei einer ersten Vorlaufsolltemperatur betrieben, die durch die Regeleinrichtung vorgeben wird, und der Raumtemperaturregler des mindestens einen Heizkörpers wird mit einem ersten Satz von Regelparametern betrieben. Anschließend wird eine aktuelle Stellgliedöffnung des Stellglieds des mindestens einen Heizkörpers erfasst. Der Verfahrensschritt des Erfassens der Stellgliedöffnung kann beispielsweise von der Einstelleinrichtung durchgeführt werden. Die erfasste Stellgliedöffnung kann dann über die Kommunikationseinrichtung an die zentrale Regeleinrichtung übertragen werden.

In einem weiteren Schritt des Verfahrens wird eine zweite Vorlaufsolltemperatur in Abhängigkeit der erfassten aktuellen Stellgliedöffnung des Stellglieds des mindestens einen Heizkörpers bestimmt. Das Bestimmen der zweiten Vorlaufsolltemperatur kann beispielsweise von der zentralen Regeleinrichtung durchgeführt werden.

In einem weiteren Verfahrensschritt wird ein zweiter Satz von Regelparametern in Abhängigkeit der aktuellen Stellgliedöffnung des Stellglieds bestimmt. Dieser Verfahrensschritt kann beispielsweise von der zentralen Regeleinrichtung oder von der Einstelleinrichtung durchgeführt werden.

Im Folgenden wird der Wärmeerzeuger mit der zweiten Vorlaufsolltemperatur betrieben. Dabei regelt die zentrale Regeleinrichtung die Vorlauftemperatur auf die zweite Vorlaufsolltemperatur. Durch diese Regelstrecke der Vorlauftemperatur kann gleichzeitig eine Regelung der Stellgliedöffnung im Referenzraum realisiert werden. Durch Einstellen der Vorlauftemperatur auf den neuen Sollwert wird erreicht, dass sich der Öffnungsgrad des Stellglieds im Referenzraum auf einen vorgegebenen Sollwert einstellt. Die zweite Vorlaufsolltemperatur kann somit insbesondere in Abhängigkeit der erfassten aktuellen Stellgliedöffnung im Referenzraum und einem Sollwert für die Stellgliedöffnung im Referenzraum bestimmt werden.

Außerdem wird der Raumtemperaturregler des mindestens einen Heizkörpers nun mit dem zweiten Satz von Regelparametern betrieben. Hierdurch kann erreicht werden, dass der Raumtemperaturregler in allen Arbeitsbereichen des Stellglieds ein optimiertes Ansprechverhalten aufweist. Dieser Aspekt wird weiter unten näher beschrieben.

Wenn die Heizungsanlage mehr als einen beheizbaren Raum aufweist, kann für jeden Raum separat jeweils ein Satz von Regelparametern für den entsprechenden Raumtemperaturregler bestimmt werden. Das Neubestimmen der Vorlauftemperatur in Abhängigkeit der Stellgliedöffnung im Referenzraum erfolgt für einen Heizkreis jedoch einheitlich. Es wird also nur eine Vorlauftemperatur pro Heizkreis bestimmt, während für jeden beheizbaren Raum eines Heizkreises jeweils optimierte Regelparameter bestimmt werden. Entscheidend für das Bestimmen der zweiten Vorlauftemperatur ist insbesondere die Stellgliedöffnung im Referenzraum. Der Referenzraum kann beispielsweise als derjenige Raum bestimmt werden, in dem die aktuell erfasste Stellgliedöffnung am größten ist. Hiermit kann ein besonders effizienter Betrieb der Heizungsanlage erreicht werden, da der Volumenstrom beziehungsweise Massenstrom durch die Heizkörper maximiert und die bereitgestellte Vorlauftemperatur minimiert werden kann.

Die maximale Stellgliedöffnung wird sich insbesondere im thermisch-hydraulisch ungünstigsten Raum einstellen, der somit zum Referenzraum wird. Da die Vorlauftemperatur in Abhängigkeit von der Stellgliedöffnung im Referenzraum bestimmt wird, kann somit gewährleistet werden, dass alle Räume ausreichend und möglichst gleichmäßig mit Wärme versorgt werden.

Die Heizungsanlage kann einen Heizkreis oder mehrere separate beziehungsweise parallele Heizkreise aufweisen. Ein Heizkreis weist jeweils einen eigenen Vorlauf und einen eigenen Rücklauf auf. Entsprechend kann für jeden Heizkreis jeweils eine Pumpe im Vorlauf und/oder im Rücklauf angeordnet sein. In jedem Heizkreis kann die Vorlauftemperatur unabhängig von der Vorlauftemperatur in anderen Heizkreisen eingestellt werden. Dies kann beispielsweise durch die Verwendung von Mischern erreicht werden. Insbesondere in Gebäuden mit mehreren Stockwerken kann die Verwendung mehrerer Heizkreise sinnvoll sein. So kann beispielsweise für jedes Stockwerk ein separater Heizkreis vorgesehen sein. Darüber hinaus können in einer Heizungsanlage separate Heizkreise für eine Fußbodenheizung und eine Heizkörperheizung mit unterschiedlichen Vorlauftemperaturen vorgesehen sein. Weist die Heizungsanlage mehrere separate beziehungsweise parallele Heizkreise auf, kann das erfindungsgemäße Verfahren für jeden Heizkreis einzeln und insbesondere jeweils unabhängig von den anderen Heizkreisen durchgeführt werden.

Das Einstellen der Stellgliedöffnungen wird lokal in jedem Raum und jedem Heizkörper durch die jeweilige Einstelleinrichtung vorgenommen, und zwar in Abhängigkeit der Abweichung der Raumisttemperatur von der Raumsolltemperatur. Die Vorlaufsolltemperatur wird in Abhängigkeit der maximalen aktuell eingestellten Stellgliedöffnung und einem Sollwert für die maximale Stellgliedöffnung durch die zentrale Regeleinrichtung vorgegeben. Die von den Einstelleinrichtungen eingestellte Stellgliedöffnung ist im Allgemeinen abhängig von der Vorlauftemperatur, da die Heizleistung der Heizkörper von der Vorlauftemperatur abhängt.

Ein bevorzugtes Verfahren kann einen Schritt umfassen, bei dem die aktuell eingestellten Stellgliedöffnungen aller Heizkörper erfasst werden. Hieraus kann die maximale aktuell eingestellte Stellgliedöffnung ermittelt werden. Der Raum mit der maximalen aktuell eingestellten Stellgliedöffnung wird als Referenzraum festgelegt. Ziel des Verfahrens ist es, die Stellgliedöffnung im Referenzraum auf einen Sollwert zu regeln. Die Vorlaufsolltemperatur kann dazu in Abhängigkeit einer Differenz zwischen der maximalen aktuell eingestellten Stellgliedöffnung und dem vorgegebenen Sollwert für die maximale Stellgliedöffnung bestimmt werden. Der Wärmeerzeuger kann dann in Abhängigkeit der bestimmten Vorlaufsolltemperatur betrieben werden.

Das Verfahren kann umfassen, dass die Vorlaufsolltemperatur abgesenkt wird, falls die maximale aktuell eingestellte Stellgliedöffnung kleiner als der vorgegebene Sollwert für die maximale Stellgliedöffnung ist. Entsprechend wird die Vorlaufsolltemperatur erhöht, falls die maximale aktuell eingestellte Stellgliedöffnung größer als der vorgegebene Sollwert für die maximale Stellgliedöffnung ist. Hierdurch wird der Grad der Stellgliedöffnung im Referenzraum über die Regelung der Vorlauftemperatur auf den Sollwert eingestellt. Es ergibt sich somit eine Kopplung der Regelkreise für die Vorlauftemperatur und die Stellgliedöffnungen.

Die Stellglieder in allen Räumen werden unabhängig von der Regelung der Vorlauftemperatur von den jeweiligen Raumtemperaturreglern in Abhängigkeit der Differenz zwischen der aktuellen erfassten Raumisttemperatur und der aktuell eingestellten Raumsolltemperatur geregelt. Eine Änderung der Vorlauftemperatur durch die Vorlauftemperaturregelung kann zu einer entsprechenden Änderung der Raumisttemperatur führen, was wiederum zu einer Anpassung der Stellgliedöffnung durch den Raumtemperaturregler führen kann. Die Regelung der Vorlauftemperatur ist somit mit der Regelung der Raumtemperatur gekoppelt. Hierbei kann es vorkommen, dass der Öffnungsgrad eines Stellglieds in einem Raum, der nicht Referenzraum war, maximal wird, so dass dieser Raum zum neuen Referenzraum wird.

Insbesondere kann das Verfahren also derart ablaufen, dass die zentrale Regeleinrichtung prüft, ob die maximale aktuell eingestellte Stellgliedöffnung größer oder kleiner als ein vorgegebener Sollwert für die maximale Stellgliedöffnung ist. Wird eine relativ hohe Vorlauftemperatur bereitgestellt, so kann dies dazu führen, dass die Einstelleinrichtungen in den einzelnen Räumen die Stellglieder der Heizköper mit relativ kleinen Öffnungsgraden betreibt, da ein relativ kleiner Volumenstrom zu einer ausreichenden Heizleistung zum Aufheizen der jeweiligen Räume ausreicht. Ein Ziel des Verfahrens ist es, die Heizungsanlage mit einer möglichst niedrigen Vorlauftemperatur zu betreiben. Stellt die zentrale Regeleinrichtung also fest, dass die maximale aktuell eingestellte Stellgliedöffnung kleiner als ein vorgegebener Sollwert ist, so kann die Vorlauftemperatur abgesenkt werden. Dies wird dazu führen, dass die Einstelleinrichtungen in den einzelnen Räumen, insbesondere im Referenzraum, die Öffnungsgrade der Stellglieder erhöhen, um eine bestimmte Heizleistung aufrechtzuerhalten. Wie oben beschrieben, reagieren die Raumtemperaturregler nur auf Abweichungen zwischen Raumisttemperatur und Raumsolltemperatur. Eine Änderung der Vorlauftemperatur kann jedoch zu einer Änderung der Raumtemperatur führen, welche wiederum eine Reaktion der Raumtemperaturregler zur Folge hat. Die Regelungen sind somit miteinander gekoppelt. Wie stark ein Raumtemperaturregler auf eine Abweichung der Raumisttemperatur von der Raumsolltemperatur reagiert hängt von den Regelparametern des Raumtemperaturreglers ab.

Beispielsweise kann ein Sollwert für die maximale Stellgliedöffnung 90% betragen. Der Öffnungsgrad des Stellglieds wird hier in Prozent der maximal möglichen Stellgliedöffnung angegeben. Die zentrale Regeleinrichtung kann die Vorlauftemperatur so lange, zum Beispiel schrittweise um eine festgelegte Temperaturänderung, absenken, bis der maximal aktuell einstellte Wert der Stellgliedöffnungen (im Referenzraum) 90% beträgt. Entsprechend kann eine Erhöhung der Vorlauftemperatur bei einer Überschreitung des Sollwerts vorgenommen werden.

Somit kann die zentrale Regeleinrichtung konfiguriert sein, die Vorlauftemperatur auf die maximale Stellgliedöffnung zu regeln. Hierdurch kann zum einen die Vorlauftemperatur auf einen möglichst kleinen Wert eingestellt werden und andererseits ein möglichst großer Volumenstrom erreicht werden.

Bei einem bevorzugten Verfahren wird der Satz von Regelparametern zum Betreiben der Raumtemperaturregler der Stellglieder mit einer aktuellen Stellgliedöffnung kleiner als die maximale aktuell eingestellte Stellgliedöffnung, also in dem mindestens einen Raum, der nicht Referenzraum ist, jeweils in Abhängigkeit der aktuellen Stellgliedöffnung und der maximalen aktuell eingestellten Stellgliedöffnung, insbesondere jeweils in Abhängigkeit der Differenz zwischen der aktuellen Stellgliedöffnung und der maximalen aktuell eingestellten Stellgliedöffnung bestimmt, falls eine festgelegte Bedingung erfüllt ist. Dies kann insbesondere dazu dienen, das Ansprechverhalten der Raumtemperaturregler in dem mindestens einen Raum, der nicht Referenzraum ist, zu verstärken, indem zum Beispiel die Regelparameter temporär verändert werden.

Als Bedingung kann zum Beispiel festgelegt sein, dass sich die maximale Stellgliedöffnung innerhalb eines festgelegten Zeitintervalls von beispielsweise fünf Minuten, zehn Minuten oder fünfzehn Minuten, um einen festgelegten Betrag verringert hat. Dies kann insbesondere vorkommen, wenn plötzlich ein Fremdwärmeeintrag in den Referenzraum stattfindet. Ein Fremdwärmeeintrag kann beispielsweise durch Sonneneinstrahlung oder das Verwenden einer Fremdwärmequelle in dem Raum bewirkt werden. In Folge des Fremdwärmeeintrags kann sich die Raumisttemperatur im Referenzraum soweit erhöhen, dass sie die eingestellte Raumsolltemperatur übersteigt. Dies führt dazu, dass der Raumtemperaturregler den Öffnungsgrad des Stellglieds des Heizkörpers (beziehungsweise der Stellglieder der Heizkörper) im Referenzraum verringert.

Alternativ oder zusätzlich zur bereits genannten Bedingung, kann als Bedingung festgelegt werden, dass die Raumisttemperatur im Raum mit der maximalen aktuell eingestellten Stellgliedöffnung (im Referenzraum) größer als die Raumsolltemperatur ist. Dies kann beispielsweise in Folge eines Fremdwärmeeintrags der Fall sein und zu einer Absenkung der Vorlauftemperatur führen. Um ein durch eine reduzierte Vorlauftemperatur verursachtes starkes Absinken der Raumtemperatur in den anderen Räumen, die nicht Referenzraum sind, zu vermeiden, kann das Ansprechverhalten der jeweiligen Raumtemperaturregler zum Beispiel durch Übersteuern der Regelparameter verstärkt werden. Dies kann dazu führen, dass ein anderer Raum schneller zum Referenzraum wird, da durch das Übersteuern der Regelparameter ein schnelleres Öffnen der Stellglieder bewirkt werden kann.

Weitere Bedingungen für das Übersteuern der Regelparameter können beinhalten, dass die aktuell eingestellte Stellgliedöffnung im Referenzraum kleiner als der Sollwert der Stellgliedöffnung für den Referenzraum ist. Um die Stellgliedöffnung im Referenzraum auf den Sollwert zu regeln, wird die zentrale Regeleinrichtung in diesem Fall die Vorlaufsolltemperatur absenken. Durch das Absenken der Vorlaufsolltemperatur erzwingt die Regeleinrichtung, dass die Raumtemperaturregler den Öffnungsgrad der Stellglieder erhöhen.

## Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:

**Figur 1** Fig. 1 zeigt eine Heizungsanlage gemäß einem ersten Ausführungsbeispiel.
**Figur 2** Fig. 2 illustriert die Abhängigkeit des Massenstroms durch ein beispielhaftes Heizkörperventil in Abhängigkeit des Ventilhubs.
**Figur 3** Fig. 3 illustriert ein Verfahren zum Bestimmen von Regelparametern in Abhängigkeit des aktuellen Öffnungsgrad eines Stellglieds.
**Figur 4** Fig. 4 illustriert eine Heizungsanlage gemäß einem weiteren Ausführungsbeispiel.
**Figur 5** Fig. 5 illustriert ein Verfahren zum Übersteuern der Regelparameter der Raumtemperaturregler.

## Ausführliche Beschreibung der Erfindung anhand von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

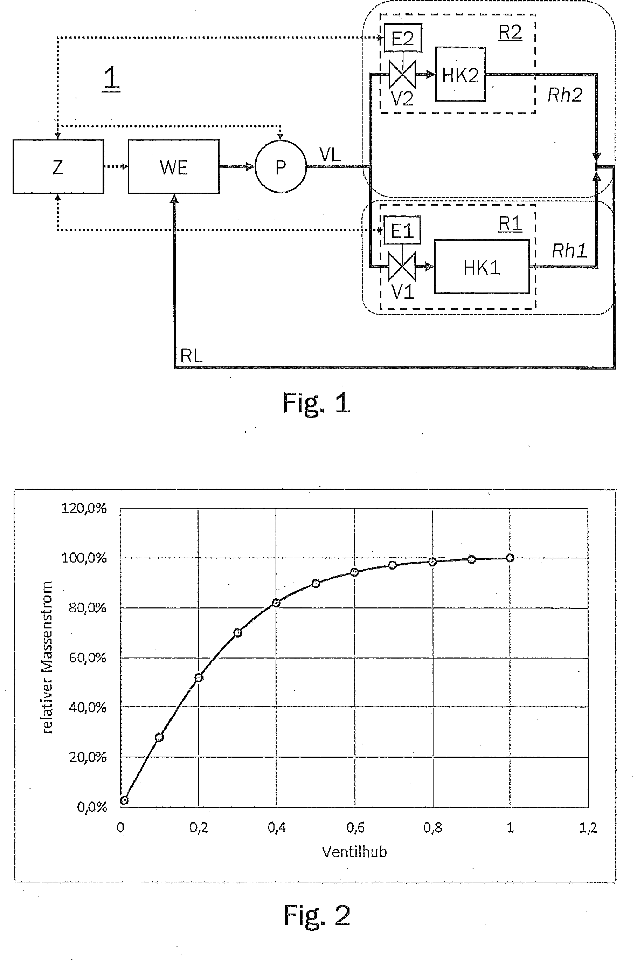

Figur 1 zeigt ein Ausführungsbeispiel einer einfachen Heizungsanlage 1 für ein Gebäude mit mindestens zwei beheizbaren Räumen R1, R2, die jeweils mindestens einen Heizkörper HK1, HK2 aufweisen. Bei den Heizkörpern HK1, HK2 kann es sich um herkömmliche Wandheizkörper wie zum Beispiel Radiatoren oder Kompaktheizkörper handeln. Die Heizkörper HK1, HK2 können aber auch Teil einer Fußbodenheizung oder Wandflächenheizung sein. Das Gebäude kann auch weitere, nicht beheizbare Räume umfassen.

Die Heizungsanlage 1 weist einen Wärmeerzeuger WE auf, bei dem es sich beispielsweise um einen mit Gas, Heizöl, Holz oder sonstigem Brennstoff betriebenen Warmwasserkessel handeln kann. Über einen Vorlauf VL fließt ein vom Wärmeerzeuger WE erhitztes fluides Wärmeträgermedium, beispielsweise Wasser, zu den mindestens zwei Heizkörpern HK1, HK2. Über einen Rücklauf RL fließt das Wärmeträgermedium von den Heizkörpern HK1, HK2 zurück zum Wärmeerzeuger WE. Zum Fördern des Wärmeträgermediums ist beispielsweise im Vorlauf VL eine Pumpe P angeordnet. Die Pumpe P kann anstatt im Vorlauf VL auch im Rücklauf RL oder im Wärmeerzeuger WE selbst angeordnet sein. Die Förderleistung der Pumpe P kann beispielsweise über die Pumpendrehzahl steuerbar beziehungsweise regelbar sein.

Über einen nicht dargestellten Temperatursensor wird eine Vorlauftemperatur $T_{VL}$ des Wärmeträgermediums im Vorlauf VL gemessen.

Die Heizkörper HK1, HK2 weisen jeweils ein Ventil V1, V2 als Stellglied zum Einstellen eines Massenstroms beziehungsweise eines Volumenstroms des Wärmeträgermediums durch den jeweiligen Heizkörper HK1, HK2 auf. Hierzu wird jeweils ein Ventilhub eines Ventils V1, V2 über einen entsprechenden Aktor eingestellt. Als Ventil V1, V2 kann beispielsweise ein Danfoss RA-N 10 Ventil mit Voreinstellung N verwendet werden. Der Ventilhub wird im Folgenden auch als Stellgliedöffnung beziehungsweise Öffnungsgrad des Ventils bezeichnet. Der Ventilhub kann beispielsweise in Prozent des maximalen Ventilhubs gemessen werden. Der Wert des Ventilhubs kann entsprechend in Prozent oder als Dezimalzahl angegeben werden.

Die Heizkörper HK1, HK2 weisen jeweils eine Einstelleinrichtung E1, E2 mit einem Temperatursensor (nicht dargestellt) zum Ermitteln einer Raumisttemperatur $T_R$ auf. Der Temperatursensor kann entweder ein Bestandteil der Einstelleinrichtung sein oder als externer Temperatursensor an einem geeigneten Ort im Raum angeordnet sein. Die Einstelleinrichtung E1, E2 kann direkt am Heizköper HK1, HK2 oder beispielsweise an einer Wand des Raumes R1, R2 angeordnet sein. Über die Einstelleinrichtung E1, E2 kann ein Benutzer eine gewünschte Raumsolltemperatur $T_{R,W}$ vorgeben. Wenn mehrere Heizkörper in einem Raum vorhanden sind, kann die in dem Raum angeordnete Einstelleinrichtung konfiguriert sein, alle Ventile der Heizkörper eines Raumes einzustellen.

Die Einstelleinrichtung E1, E2 weist ferner einen Raumtemperaturregler zum Einstellen und Regeln des Öffnungsgrads des Ventils V1, V2 auf. Der Raumtemperaturregler der Einstelleinrichtung E1, E2 ist konfiguriert, den Ventilhub in Abhängigkeit einer jeweils pro Raum vorgegebenen Raumsolltemperatur $T_{R,W}$ und der ermittelten Raumisttemperatur $T_R$ zu regeln. Da der Ventilhub jeweils pro Raum eingestellt wird, kann hiermit eine Einzelraumregelung der Raumtemperatur verwirklicht werden. In alternativen Ausführungen der Erfindung kann der mindestens eine Raumtemperaturregler in der zentralen Regeleinrichtung Z angeordnet sein oder als separates Element der Heizungsanlage ausgebildet sein.

Die Einstelleinrichtung E1, E2 umfasst eine Kommunikationseinrichtung zum Kommunizieren mit einer zentralen Regeleinrichtung Z der Heizungsanlage 1. Die Kommunikationseinrichtung kann entweder über eine geeignete drahtgebundene Leitung und/oder drahtlos mit der zentralen Regeleinrichtung Z kommunizieren. Die Einstelleinrichtungen E1, E2 können auch dazu ausgelegt sein, untereinander zu kommunizieren, so dass zum Beispiel Daten (wie zum Beispiel Sollwerte, aktuelle Messwerte und/oder andere Vorgaben wie Regelparameter) untereinander ausgetauscht oder an die Regeleinrichtung Z weitergeleitet werden können.

Die zentrale Regeleinrichtung Z der Heizungsanlage 1 steuert beziehungsweise regelt den Wärmeerzeuger WE, um die Vorlauftemperatur $T_{VL}$ des Trägermediums auf eine vorgegebene Vorlaufsolltemperatur $T_{VL,W}$ einzustellen. Hierzu kann die Regeleinrichtung Z beispielsweise Steuersignale an einen Feuerungsautomaten des Wärmeerzeugers WE ausgeben. Ferner kann die zentrale Regeleinrichtung Z konfiguriert sein, die Förderleistung der Pumpe P zu regeln oder zu steuern, um einen Massenstrom durch den Vorlauf VL beziehungsweise durch den Rücklauf RL einzustellen. Wie oben erwähnt kann die zentrale Regeleinrichtung Z auch den mindestens einen Raumtemperaturregler umfassen. Die zentrale Regeleinrichtung Z kann eine Komponente des Wärmeerzeugers WE oder eine separate Vorrichtung sein, die mit dem Wärmeerzeuger WE kommuniziert. Die Regeleinrichtung ist ferner konfiguriert, mit den Einstelleinrichtungen E1, E2 der Heizkörper HK1, HK2 zu kommunizieren, beispielsweise um Daten auszulesen oder um Sollwerte oder Regelparameter vorzugeben. Die Kommunikation zwischen der zentralen Regeleinrichtung Z, der Pumpe P, dem Wärmeerzeuger WE und den Einstelleinrichtungen E1, E2 kann jeweils drahtgebunden und/oder drahtlos erfolgen. Hierzu umfassen die zentrale Regeleinrichtung Z, die Pumpe P, der Wärmeerzeuger WE und die Einstelleinrichtungen E1, E2 entsprechende Schnittstellen.

Mittels der Regeleinrichtung Z kann die Vorlauftemperatur $T_{VL}$ auf einen bestimmten Sollwert $T_{VL,W}$ eingestellt werden. Hierzu kann die Regeleinrichtung Z entsprechende Regelsignale an den Wärmeerzeuger WE und/oder an die Pumpe P und/oder an entsprechende Heizkreismischer ausgeben. Insbesondere wenn eine Vielzahl von Heizkreisen mit jeweils unabhängig voneinander einstellbarer Vorlauftemperatur betrieben wird, kann die Regelung der Vorlauftemperaturen für jeden Heizkreis jeweils mittels steuerbarer Heizkreismischer erfolgen. Die Vorlauftemperaturregelung mittels der Regeleinrichtung Z kann völlig unabhängig von der Einzelraumregelung der Raumtemperaturen mittels der Raumtemperaturregler erfolgen. Andererseits regeln die Einzelraumregler die Raumtemperatur jeweils nur in Abhängigkeit der Abweichung der Raumisttemperatur von der Raumsolltemperatur. Da die Vorlaufsolltemperatur jedoch in Abhängigkeit der aktuellen Stellgliedöffnung und einer Sollstellgliedöffnung im Referenzraum bestimmt wird, sind die beiden Regelkreise wie bereits beschrieben miteinander gekoppelt.

In Fig. 1 ist eine Heizungsanlage 1 mit einem Heizungskreis dargestellt, der zwei Heizungsstränge aufweist. Die beiden Heizungsstränge durch die beiden Räume R1, R2 weisen im Wesentlichen identische hydraulische Widerstände Rh1, Rh2 auf. Das heißt, dass bei gleicher Ventilöffnung der beiden Ventile V1, V2 in beiden Strängen ein im Wesentlichen identischer Massenstrom beziehungsweise Volumenstrom fließt.

In dem in Fig. 1 dargestellten Beispiel weist der Heizkörper HK1 in Raum R1 eine deutlich größere Fläche auf als der Heizkörper HK2 in Raum 2. Der Heizkörper HK1 in Raum R1 kann somit bei gleicher Temperatur mehr Wärme abgeben als der Heizkörper HK2 in Raum R2. Die Heizlast, also die zum Erreichen der Raumsolltemperatur benötigte Heizleistung, ist in beiden Räumen R1, R2 ungefähr gleich groß. Der Quotient aus installierter Heizkörpernormleistung und Heizlast ist Raum R1 somit deutlich größer als in Raum R2. Bei gleichem Massenstrom durch die beiden Heizkörper HK1, HK2 würde demnach in Raum R1 im Vergleich zu Raum R2 eine deutlich niedrigere Vorlauftemperatur $T_{VL}$ ausreichen, um dieselbe Raumsolltemperatur $T_{R,W}$ zu erreichen. Der Raum R2 ist also der thermisch-hydraulisch ungünstigere der beiden Räume R1, R2.

Ein erster Raum kann auch dann thermisch-hydraulisch ungünstiger als ein zweiter Raum sein, wenn der hydraulische Widerstand zwischen dem Wärmeerzeuger WE und einem im ersten Raum angeordneten Heizkörper größer als der hydraulische Widerstand zwischen dem Wärmeerzeuger WE und einem im zweiten Raum angeordneten Heizkörper ist. Im Allgemeinen benötigt ein thermisch-hydraulisch ungünstiger Raum bei einer gegebenen Vorlauftemperatur $T_{VL}$ mehr Zeit um eine bestimmte Raumsolltemperatur $T_{R,W}$ zu erreichen als ein thermisch-hydraulisch günstigerer Raum. Maßgeblich für die benötigte Zeit zum Aufheizen eines Raumes auf eine Raumsolltemperatur sind das Raumvolumen, die mittlere thermische Kapazität des Raumes, Wärmeverluste an die Umgebung, die Oberfläche des Heizkörpers, der Massenstrom beziehungsweise Volumenstrom durch den Heizkörper sowie die mittlere Temperatur des Heizkörpers, die aus der Differenz der Vorlauftemperatur und der Rücklauftemperatur berechnet werden kann und ein Maß für den Wärmeübertrag vom Trägermedium auf den Raum ist.

Bei einer Außentemperatur von beispielsweise -5°C würde in Raum R1 eine relativ niedrige Vorlauftemperatur von 40°C ausreichen, um den Raum bei voll geöffnetem Ventil V1 innerhalb eines Zeitraums von etwa einer Stunde auf einen vorgegebenen Sollwert der Raumtemperatur von etwa 23°C aufzuheizen. In Raum R2 wäre dagegen aufgrund des kleineren Heizkörpers HK2 bei voll geöffnetem Ventil V2 eine Vorlauftemperatur von 60°C notwendig, um dieselbe Raumsolltemperatur $T_{R,W}$ innerhalb von einer Stunde zu erreichen. Im stationären Zustand, wenn die Raumisttemperatur im Wesentlichen der gewünschten Raumsolltemperatur entspricht, kann der Raumtemperaturregler der Einzelraumregelung in Raum R1 das Ventil V1 mit einem kleineren Ventilhub (Ventilöffnungsgrad) betreiben als der Raumtemperaturregler die Einzelraumregelung das Ventil V2 in Raum R2, da beide mit derselben Vorlauftemperatur betrieben werden. In Raum R2 ist also bei gegebener Vorlauftemperatur ein höherer Massenstrom beziehungsweise Volumenstrom des Trägermediums notwendig, um einen ausreichend großen Wärmeübertrag zum Halten der Raumisttemperatur beim Sollwert zu bewirken.

Bei der dynamischen Referenzraumregelung wird über den mittels der Regeleinrichtung Z realisierten Vorlauftemperaturregelkreis die Vorlauftemperatur so eingestellt, dass sich in einem Referenzraum ein bestimmter Sollwert der Ventilöffnung $H_W$ einstellt. Als Referenzraum wird derjenige Raum gewählt, in dem der aktuelle Ventilhub $H_{akt}$ am größten ist. Hierzu kann beispielsweise die zentrale Regeleinrichtung Z alle aktuellen Ventilhübe auslesen, und den Raum mit dem aktuell größten Ventilhub ermitteln.

Im vorliegenden Beispiel gilt zunächst der thermisch-hydraulisch ungünstigere Raum R2 als Referenzraum, da sich hier eine größere Ventilöffnung einstellt. Die zentrale Regeleinrichtung Z regelt die Vorlauftemperatur auf einen ersten Wert der Vorlaufsolltemperatur, bei dem sich im Ventil V2 ein Ventilhub mit einem vorbestimmten Sollwert einstellt. Dieser Sollwert kann vorgegeben werden und beispielsweise 90% betragen. Die resultierende Vorlauftemperatur beträgt beispielsweise 60°C. Diese ist ausreichend, um den Raum R2 auf die Raumsolltemperatur $T_{R,W}$ zu heizen. Diese Vorlauftemperatur ist jedoch für Raum R1 deutlich zu hoch, so dass das Ventil V1 in Raum R1 im stationären Zustand einen deutlich kleineren Ventilhub von beispielsweise nur 10% annimmt, um zu vermeiden, dass die Raumtemperatur in Raum R2 den Raumtemperatursollwert überschreitet. Aufgrund der unterschiedlichen Dimensionierung der beiden Heizkörper HK1, HK2 in den Räumen R1, R2 stellen sich somit sehr unterschiedliche Ventilöffnungsgrade der Ventile V1, V2 ein. Mithin ergibt sich ein Fall, in dem die zwei Ventile V1, V2 in sehr unterschiedlichen Arbeitspunkten betrieben werden, was zu verschiedenen Problemen führen kann, wie im Folgenden anhand von Fig. 2 näher beschrieben wird.

Die in Fig. 2 gezeigte Kurve illustriert beispielhaft die Abhängigkeit des Durchflusses (relativer Massenstrom gemessen in Prozent des maximalen Massenstroms bei maximaler Ventilöffnung) durch ein Ventil vom Öffnungsgrad des Ventils für ein typisches Heizkörperventil. Die Abhängigkeit des Massenstroms vom Ventilhub kann bei jedem Ventil etwas unterschiedlich sein.

Bei kleinen Ventilhüben hat eine Ventilhubänderung um einen bestimmten Betrag eine relativ große Massenstromänderung zur Folge. In dem beispielhaften Verlauf der Fig. 2 gilt dies insbesondere für Werte des Ventilhubs, die zwischen 0 und 0,3 liegen. In diesem Bereich bewirkt eine Ventilhubänderung von 0,1 eine Massenstromänderung von ungefähr 20% bis 30%. Im Gegensatz dazu fällt die Massenstromänderung bei einer Ventilhubänderung um denselben Betrag bei größeren Ventilhüben deutlich kleiner aus. In Fig. 2 gilt dies für Werte des Ventilhubs, die zwischen 0,4 und 1 liegen. In diesem Bereich bewirkt eine Ventilhubänderung von 0,1 eine Massenstromänderung von weniger als 10% bis weniger als 1%. Diese starke Nichtlinearität in der Abhängigkeit der Massenstromänderung vom Betrag der Ventilhubänderung kann das Regelverhalten eines Raumtemperaturreglers, der die Raumtemperatur über den Ventilhub regelt, stark beeinflussen.

Ein konventioneller Regler kann bei stark nichtlinearer Abhängigkeit der Stellgröße (hier Massenstrom vom Ventilhub) nur für einen eingeschränkten Arbeitsbereich optimal ausgelegt werden. Bei der vorliegenden Nichtlinearität (siehe Fig. 2) der Regelstrecke zwischen Ventilhub und Massenstrom hat dies zur Folge, dass der Regler entweder für den unteren Arbeitsbereich, also insbesondere für den Bereich zwischen einem Wert von 0 und 0,3 des Ventilhubs, oder für den oberen Arbeitsbereich, also insbesondere für den Bereich zwischen einem Wert von 0,4 und 1 des Ventilhubs, eingestellt werden kann. Das Ansprechverhalten eines für den unteren Arbeitsbereich optimierten Reglers, ist für den oberen Arbeitsbereich zu schwach. Bei einem für den oberen Arbeitsbereich optimierten Regler besteht hingegen das Risiko, dass es im unteren Arbeitsbereich zu Instabilitäten, insbesondere zu starken Schwingungen im Regelverhalten kommen kann.

Bei herkömmlichen Verfahren ohne Referenzraumregelung werden die Ventile normalerweise entweder nur im unteren oder nur im oberen Arbeitsbereich betrieben. Die mit den Ventilen gekoppelten Raumtemperaturregler werden dabei entsprechend für nur einen dieser Arbeitsbereiche optimiert. Bei der dynamischen Referenzraumregelung kommt es hingegen häufig vor, dass Ventile verschiedener Räume in unterschiedlichen Arbeitsbereichen betrieben werden. Dies kann beispielsweise durch unterschiedliche Heizlasten der Räume oder unterschiedliche Heizleistungen der Heizkörper (in Relation zur jeweiligen Heizlast des Raums) bedingt sein. Wie bereits erwähnt soll bei der dynamischen Referenzraumregelung das Ventil im aktuellen Referenzraum möglichst konstant bei einem festgelegten Sollwert des Ventilhubs betrieben werden. Hierzu regelt die überlagerte Vorlauftemperaturregelung die Vorlauftemperatur auf einen Wert, bei dem das Ventil im Referenzraum den festgelegten Sollwert des Ventilhubs annimmt. Der Sollwert der Stellgliedöffnung im Referenzraum kann zum Beispiel so gewählt werden, dass ein möglichst hoher Massenstrom beziehungsweise Volumenstrom durch den Heizkörper des Referenzraums sichergestellt wird, so dass gleichzeitig die Vorlauftemperatur auf einen möglichst geringen Wert geregelt werden kann.

Größere Unterschiede in den Öffnungsgraden der Stellglieder verschiedener beheizter Räume eines Heizkreises können insbesondere auch dann auftreten, wenn ein Verfahren zum automatischen hydraulischen Abgleich einer Heizungsanlage verwendet wird. Ein solches Verfahren wird beispielsweise in der Patentanmeldung mit dem amtlichen Aktenzeichen DE 10 2017 203 850 beschrieben. Ziel eines solchen Verfahrens ist es unter anderem, ein gleichmäßiges Aufheizen aller Räume in einem Heizkreis zu gewährleisten. Hierzu kann die zentrale Regeleinrichtung die Öffnungsgrade aller Stellglieder erfassen und eine Vorlauftemperatur in Abhängigkeit der erfassten Stellgliedöffnungen bestimmen.

In der Praxis hat sich gezeigt, dass die Ventile in nahezu allen Arbeitspunkten betrieben werden müssen, um eine effiziente dynamische Referenzraumregelung realisieren zu können. Dynamische Referenzraumregelung beinhaltet nämlich, dass der Referenzraum in Abhängigkeit der aktuell eingestellten Ventilhübe gewählt wird. Zudem ist es für einen ordnungsgemäßen Betrieb einer Heizungsanlage mit dynamischer Referenzraumregelung aufgrund der Kopplung des Vorlauftemperaturregelkreises mit der Einzelraumregelung notwendig, dass die Reaktionsstärke der einzelnen Raumtemperaturregler in allen Arbeitspunkten groß genug ist. Reagiert die Raumtemperaturregelung nämlich zu schwach, kann dies in Kombination mit der Vorlauftemperaturregelung dazu führen, dass die Raumsolltemperatur $T_{R,W}$ im Referenzraum nicht mehr erreicht werden kann, da die zentrale Regeleinrichtung Z als Vorlauftemperaturregler den Ventilhub des Ventils im Referenzraum zwar auf den Sollwert regelt, dieser Ventilhub in Kombination mit der eingestellten Vorlauftemperatur jedoch nicht ausreicht, um im Referenzraum die Raumsolltemperatur $T_{R,W}$ zu erreichen. Reagiert der Raumtemperaturregler zu schwach auf diese Abweichung, kann er die entsprechend benötigte Vorlauftemperaturanpassung nicht erzwingen.

Das erfindungsgemäße Verfahren zielt darauf ab, einen effizienten Betrieb der dynamischen Referenzraumregelung in allen Arbeitsbereichen der Raumtemperaturregler sicherzustellen.

Wie bereits beschrieben ergibt sich in dem beschriebenen Ausführungsbeispiel für den das Ventil V1 in Raum R1 ein Ventilöffnungsgrad von 10% und für das Ventil V2 in Raum R2 ein Ventilöffnungsgrad von 90%, wobei der Raum R2 als Referenzraum gilt und die überlagerte Vorlauftemperaturregelung den Wert der Vorlauftemperatur so einstellt, dass das Ventil V2 in Raum R2 auf den Sollwert des Ventilhubs $H_W$ von 90% öffnet. Die Raumtemperaturregler können beispielsweise als PID- oder PI-Regler ausgebildet sein. Die Regelparameter der Einzelraumregler können in Abhängigkeit des tatsächlichen aktuellen Ventilhubs des zugehörigen Ventiles ermittelt werden. Im Folgenden wird beschrieben, wie die Regelparameter für die beiden Einzelraumregler in Räumen R1 und R2 ermittelt werden.

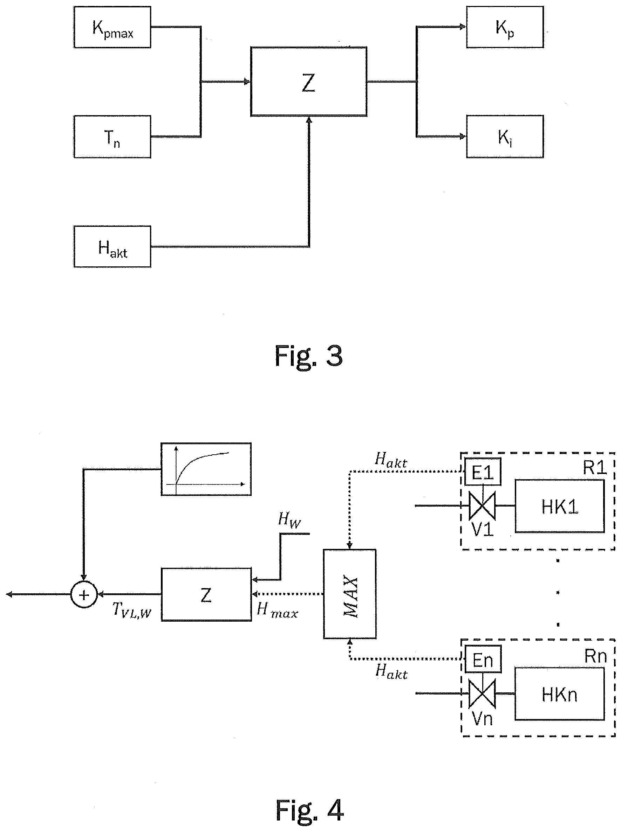

Der beispielhafte Raumtemperaturregler ist ein PI-Regler, dessen Regelverhalten durch zwei Regelparameter $K_p$ und $K_i$ bestimmt wird. Die Regelparameter $K_p$ und $K_i$ können für jeden Raumtemperaturregler gemäß einem Verfahren, das in Fig. 3 illustriert ist, anhand fest vorgegebener Eingangsparameter $K_{pmax}$ und $T_n$ aus den aktuellen Öffnungsgraden $H_{akt}$ der jeweiligen Stellglieder bestimmt werden. Der Parameter $K_p$ bestimmt den proportionalen Anteil des P-Reglglieds. Der Parameter $K_i$ beschreibt das Verhalten des I-Reglglieds. Der Parameter $K_i$ wird als Quotient aus dem Regelparameter $K_p$ und der vorgegebenen Nachstellzeit $T_n$ berechnet. $K_p$ wird als Produkt aus dem vorgegebenen Parameter $K_{pmax}$ und der aktuellen Stellgliedöffnung des jeweiligen Stellglieds errechnet. Der Regelparameter $K_p$ und somit das Regelverhalten des Raumtemperaturregler wird also in Abhängigkeit der aktuellen Stellgliedöffnung bestimmt. Die beiden Regelparameter $K_p$ und $K_i$ können beispielsweise berechnet werden aus:

$$K_p = H_{akt} \cdot K_{pmax}$$

$$K_i = K_p \div T_n$$

Beispielhaft sei ein $K_{pmax}$ von $40\frac{\%}{K}$ und eine Nachstellzeit von $T_n$ = 3600s vorgegeben. Für Raum R1 und Raum R2 ergeben sich demnach in Abhängigkeit der aktuellen Stellgliedöffnungen von 10% und 90% die folgenden Regelparameter für die Einzelraumregelung:

$$\text{R1:} \quad K_p = 0.1 \cdot 40\frac{\%}{K} = 4\frac{\%}{K}; \; K_i = 4\frac{\%}{K} \div 3600s = 0.001\frac{\%}{Ks}$$

$$\text{R2:} \quad K_p = 0.9 \cdot 40\frac{\%}{K} = 36\frac{\%}{K}; \; K_i = 36\frac{\%}{K} \div 3600s = 0.01\frac{\%}{Ks}$$

Der P-Anteil $K_p$ des Raumtemperaturreglers ist in Raum R1 bei kleinem Ventilhub somit deutlich kleiner als in Raum R2. Steigt nun beispielsweise durch einen Fremdwärmeeintrag die Raumtemperatur $T_R$ spontan in beiden Räumen um 1 Kelvin an, wird das Ventil V2 in Raum R2 um einen Hub von 36% und das Ventil V1 in Raum R1 um einen Hub von 4% schließen. Legt man die Ventilcharakteristik aus Fig. 2 zugrunde, resultiert dies in Änderungen des relativen Massenstromes von 11% in Raum 1 und 7% in Raum 2.

Würden beide Raumtemperaturregler unabhängig vom Arbeitsbereich mit einem festen Regelparameter $K_p$ von 4%/K betrieben werden, so würde dies in Raum R2 in einer unmerklichen Massenstromreduktion durch das Ventil V2 von nur 0.2% resultieren. Umgekehrt würde bei Ventil V1 in Raum R1 ein fest vorgegebenes $K_p$ von 36%/K zu einem kompletten Schließen des Ventiles V1 mit einer Änderung des Massenstromes von 29% (bei Ventilhub 10%) auf 0% führen. Im zweiten Fall wäre die Reaktion des Raumtemperaturreglers viel zu stark, was zu Instabilitäten (Schwingen) im Regelkreis führen kann. Im ersten Fall wäre hingegen die Reaktion des Reglers in Raum R1 viel zu schwach, um einen spürbaren Effekt auf die Raumtemperatur zu bewirken. In beiden Fällen würde dies insbesondere in Kombination mit dem überlagerten Vorlauftemperaturregelkreis dazu führen, dass dieser praktisch nicht mehr oder erst deutlich verspätet auf den Fremdwärmeeintrag durch eine Anpassung der Vorlauftemperatur reagieren könnte, so dass ein unzureichendes Zusammenspiel der beiden Regelkreise resultieren würde. Durch das Bestimmen der Regelparameter in Abhängigkeit der aktuellen Stellgliedöffnungen können die Raumregler jeweils für den aktuellen Arbeitsbereich optimiert werden, so dass ein korrekter Betrieb in allen Arbeitsbereichen ermöglicht wird.

Das Koppeln der beiden Regelkreise zur Vorlauftemperaturregelung und zur Einzelraumregelung bewirkt einen weiteren Effekt. Ausgehend vom stationären Zustand mit Ventilöffnungsgraden von 90% (V2 in Raum R2) und 10% (V1 in Raum R1) resultiert durch einen plötzlichen Fremdwärmeeintrag in Raum R2, zum Beispiel verursacht durch Sonneneinstrahlung, ein Raumtemperaturanstieg. Übersteigt die Raumisttemperatur $T_R$ die vorgegebene Raumsolltemperatur $T_{R,W}$, so wird Ventil V2 durch den Raumtemperaturregler um einen entsprechenden Betrag geschlossen. Durch die Kopplung der Vorlauftemperatur an den Öffnungsgrad des Ventils des Referenzraums wird die Vorlaufsolltemperatur $T_{VL,W}$ ebenfalls von der zentralen Regeleinrichtung Z abgesenkt, denn der überlagerte Regelkreis der Vorlauftemperaturregelung versucht, den Öffnungsgrad $H_{akt}$ des Ventils im Referenzraum auf den vorgegebenen Sollwert $H_W$ einzustellen.

Durch das Absenken der Vorlauftemperatur wird der Raumtemperaturregler in Raum R1 das Ventil V1 öffnen, um ein Absinken der Raumtemperatur $T_R$ unter den Sollwert $T_{R,W}$ zu verhindern. Dies kann dazu führen, dass der Öffnungsgrad $H_{akt}$ des Ventils V1 größer wird als der Öffnungsgrad $H_{akt}$ des Ventils V2, so dass Raum R1 zum Referenzraum wird. Da der Unterschied zwischen dem maximalen Ventilhub von 90% im Referenzraum R2 und dem Ventilhub von 10% in Raum R1 zunächst sehr groß ist, kann es jedoch eine längere Zeit dauern, bevor der Ventilhub in Raum R1 größer wird als in Raum R2 und der Raum R1 zum Referenzraum wird. Dies kann bei der Absenkung der Vorlauftemperatur $T_{VL}$ jedoch zu einem großen Temperaturabfall der Raumtemperatur $T_R$ in Raum R1 führen. Schon ein Temperaturabfall von ungefähr 1 K kann von einem Benutzer des Raumes als spürbarer Wärmeverlust wahrgenommen werden.

Um einen großen Temperaturabfall in Räumen, die nicht Referenzraum sind, zu vermeiden, kann das erfindungsgemäße Verfahren um einen weiteren Aspekt ergänzt werden. Hierbei werden die Regelparameter der Raumtemperaturregler in Abhängigkeit eines Freigabesignals temporär unter Anwendung eines modifizierten Verfahrens bestimmt, um auf die oben beschriebene Situation zu reagieren. Dabei wird der Parameter $K_{pmax}$ in Abhängigkeit der Differenz zwischen dem maximalen aktuell (im Referenzraum) eingestellten Ventilhub und dem Ventilhub der jeweiligen Ventile in den Räumen, die nicht Referenzraum sind, bestimmt. Bei einer großen Differenz ist eine stärkere Reaktion des jeweiligen Raumtemperaturreglers vonnöten (größeres $K_{pmax}$), da es länger dauert, bis das entsprechende Ventil weit genug öffnet, um zum Referenzraum zu werden und damit die Kontrolle über die Vorlauftemperatur zu übernehmen. Bei einem kleinen Unterschied zwischen dem maximalen Ventilhub und dem jeweiligen Ventilhub ist hingegen eine kleinere Reaktion vonnöten, da dann das Ventil deutlich schneller zum Referenzraum und damit die Maßgabe für die benötigte Vorlauftemperatur werden kann.

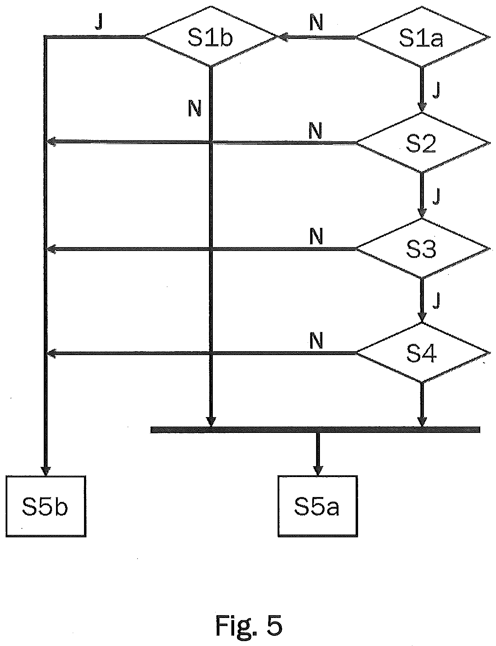

Fig. 5 illustriert ein Verfahren zum Erzeugen eines entsprechenden Freigabesignals in Abhängigkeit einer Vielzahl von festgelegten Bedingungen. Ziel ist es, eine Verringerung des Öffnungsgrades des Ventils im Referenzraum, zum Beispiel aufgrund eines Fremdwärmeeintrags oder eines Sollwertsprungs nach unten zu detektieren, und, basierend darauf, eine Übersteuerung der Regelparameter für eine definierte Zeitdauer freizugeben.

Im Schritt S1a wird geprüft, ob das Freigabesignal zum Übersteuern der Regelparameter bereits aktiv ist. Ist dies der Fall (J), so erfolgt im Schritt S1b eine Überprüfung, ob die definierte Zeitdauer bereits abgelaufen ist oder nicht. Ist die Zeitdauer noch nicht abgelaufen (N) geht das Verfahren wieder zurück zu Schritt S1a. Wenn die Zeitdauer schon abgelaufen ist (J in S1b), so geht das Verfahren weiter zu Schritt S5b, in dem das Freigabesignal zum Übersteuern der Regelparameter auf null gesetzt wird.

Ist das Ergebnis der Überprüfung in Schritt S1a, dass das Freigabesignal noch nicht aktiv ist, so geht das Verfahren weiter zum Schritt S2, in dem eine erste festgelegte Bedingung geprüft wird. Die erste Bedingung kann beispielsweise sein, dass sich die Stellgliedöffnung $H_{max}$ im Referenzraum innerhalb eines festgelegten Zeitintervalls $\Delta t$ um einen festgelegten Betrag $\Delta H(\Delta t)$ verringert hat. In anderen Worten, die Bedingung $H_{max}(t - \Delta t) - H_{max}(t) > \Delta H(\Delta t)$ muss erfüllt sein, wobei der Zeitpunkt $t$ der aktuelle Zeitpunkt ist. Ein Verringern der Stellgliedöffnung ist ein Zeichen dafür, dass die Raumisttemperatur $T_R$ größer als oder gleich groß wie die Raumsolltemperatur $T_{R,W}$ ist. Ist die Bedingung erfüllt (J), so geht das Verfahren weiter zu Schritt S3. Andernfalls (N) geht das Verfahren weiter zu Schritt S5b, so dass kein Freigabesignal erteilt wird.

Im Schritt S3 kann als zweite Bedingung überprüft werden, ob die Raumisttemperatur $T_R$ im Referenzraum gleich groß wie oder größer als die Raumsolltemperatur $T_{R,W}$ des Referenzraums ist. Wie oben beschrieben, führt dies insbesondere dazu, dass der Raumtemperaturregler den Öffnungsgrad des Stellglieds verringert. Ist die zweite Bedingung erfüllt (J), so geht das Verfahren weiter zu Schritt S4. Andernfalls (N) geht das Verfahren weiter zu Schritt S5b, so dass kein Freigabesignal erteilt wird.

Im Schritt S4 kann als dritte Bedingung überprüft werden, ob die aktuell eingestellte Stellgliedöffnung $H_{akt}$ im Referenzraum kleiner ist als der Sollwert der Stellgliedöffnung $H_W$. Ist dies der Fall, so wird die zentrale Regeleinrichtung Z die Vorlaufsolltemperatur $T_{VL,W}$ verringern, was wie bereits beschrieben zu einem Temperaturabfall in den anderen Räumen führen kann. Ist die dritte Bedingung erfüllt (J), so geht das Verfahren weiter zu Schritt S5a. Andernfalls (N) geht das Verfahren weiter zu Schritt S5b, so dass kein Freigabesignal erteilt wird.

In Schritt S5a wird bei Erfüllen der Bedingungen das Freigabesignal aktiviert. Anschließend geht das Verfahren wieder zurück zum ersten Schritt S1a, so dass ein zyklischer Ablauf erfolgt. Ausgehend von Schritt S5b kann das Verfahren ebenfalls zum ersten Schritt S1a zurückkehren, oder es kann eine Wartezeit festgelegt werden, bevor erneut das Vorliegen der Bedingungen geprüft wird.

Im Folgenden wird ausgehend von dem Beispiel mit einem Öffnungsgrad von 90% des Ventils V2 in Raum R2 und einem Öffnungsgrad $H_{akt}$ von 10% des Ventils V1 in Raum R1 das Übersteuern der Regelparameter näher erläutert. Aufgrund eines Fremdwärmeeintrags steigt die Raumisttemperatur $T_R$ im Referenzraum R2 über den Sollwert $T_{R,W}$ der Raumtemperatur an. Der maximale aktuell eingestellte Ventilhub $H_{max}$ des Ventils V2 im Referenzraum R2 reduziert sich dadurch innerhalb eines Zeitraums $\Delta t$ von fünfzehn Minuten um einen Differenzbetrag von 10% (von 90% auf 80%) und damit unter den vorgegebenen Sollwert $H_W$. Als Grenzwert $\Delta H(\Delta t)$ sind beispielsweise 5% vorgegeben. Da somit die erste Bedingung gemäß Schritt S2 erfüllt ist, kann die Parameterübersteuerung aktiviert werden.

Das Verringern des Ventilhubs $H_{akt}$ durch den Vorlauftemperaturregler im Referenzraum bewirkt auch ein Absenken der die Vorlaufsolltemperatur $T_{VL,W}$ durch die zentrale Regeleinrichtung Z. Dies führt nun dazu, dass die Raumisttemperatur $T_R$ in Raum R1 abzusinken beginnt. Ein neuer Parameter $K_{pmax}$ wird dann ausgehend vom altern Wert $K_{pmax} = 40\,\frac{\%}{K}$ $K_{pmax}$ anhand der folgenden Formel berechnet:

$$K_{pmax\_neu} = 2 \cdot \frac{K_{pmax}}{40\%} \cdot (H_{max} - H_{akt}) + K_{pmax}$$

$$K_{pmax\_neu} = 2 \cdot \frac{40}{40} \cdot 70\,\frac{\%}{K} + 40\,\frac{\%}{K} = 180\,\frac{\%}{K}$$

Dies führt dann gemäß der anhand von Fig. 3 beschriebenen Parameterbestimmung zu den folgenden Regelparametern für den Raumtemperaturregler in Raum R1:

$$K_p = 180\frac{\%}{K} \cdot 0.1 = 18\frac{\%}{K}$$

$$K_i = 18\frac{\%}{K} \div 3600s = 0.005\frac{\%}{Ks}$$

Beide Parameter $K_p$ und $K_i$ werden also ungefähr um einen Faktor fünf überhöht. Die hierdurch verstärkte Reaktion des Raumtemperaturreglers in Raum R1 ermöglicht eine schnellere Übergabe des Referenzraumes von Raum R2 auf Raum R1.

Fig. 4 zeigt ein weiteres Ausführungsbeispiel einer Heizungsanlage 1, die im Wesentlichen der Heizungsanlage 1 der Fig. 1 entspricht, wobei die Heizungsanlage 1 eine im Wesentlichen beliebige Anzahl n an Heizkörpern HK1 bis HKn in einer Vielzahl von Räumen R1 bis Rn umfasst. Die zentrale Regeleinrichtung Z ist konfiguriert, die aktuell eingestellten Ventilhübe (Stellgliedöffnungen) $H_{akt}$ aller Ventile (Stellglieder) V1 bis Vn der Heizkörper HK1 bis HKn zu erfassen. Eine externe oder intern in der Regeleinrichtung Z verbaute Elektronik MAX ermittelt aus den aktuell einge-stellten Ventilhüben $H_{akt}$ einen Maximalwert $H_{max}$. Der Raum Ri, in dem sich das Stellglied Vi mit der maximalen aktuell eingestellten Stellgliedöffnung $H_{max}$ befindet, wird als Referenzraum für das Bestimmen der Vorlaufsolltemperatur $T_{VL,W}$ festgelegt. Die zentrale Steuereinrichtung Z ermittelt dann in Abhängigkeit einer Differenz zwischen dem maximalen aktuell eingestellten Ventilhub $H_{max}$ und einem vorgegebenen Sollwert $H_W$ für den maximalen Ventilhub den Sollwert $T_{VL,W}$ für die Vorlauftemperatur.

Insbesondere prüft die zentrale Regeleinrichtung Z, ob der maximale aktuell eingestellte Ventilhub $H_{max}$ größer oder kleiner als der vorgegebene Sollwert $H_W$ für den maximalen Ventilhub ist. Eine hohe Vorlauftemperatur $T_{VL}$ kann dazu führen, dass die Einstelleinrichtungen E1 bis En in den einzelnen Räumen R1 bis Rn die Ventile V1 bis Vn der Heizköper HK1 bis HKn mit relativ kleinen Ventilhüben $H_{akt}$ betreiben, da schon ein kleiner Volumenstrom zu einer ausreichenden Heizleistung zum Aufheizen der Räume führen kann.

Ziel des Verfahrens ist es unter anderem, die Heizungsanlage 1 mit einer möglichst niedrigen Vorlauftemperatur $T_{VL}$ zu betreiben. Stellt die zentrale Regeleinrichtung Z also fest, dass der maximale aktuell einstellte Ventilhub $H_{max}$ kleiner als ein vorgegebener Sollwert $H_W$ ist, so kann die Vorlauftemperatur $T_{VL}$ abgesenkt werden. Dies führt dazu, dass die Einstelleinrichtungen E1..En in den einzelnen Räumen R1...Rn die Ventile V1..Vn weiter öffnen, um eine gleichbleibende Heizleistung zu erzielen. Beispielsweise kann der Sollwert $H_W$ für den maximalen Ventilhub (im Referenzraum) 90% betragen. Die zentrale Regeleinrichtung Z senkt den Sollwert $T_{VL,W}$ der Vorlauftemperatur $T_{VL}$ so lange schrittweise, zum Beispiel um eine festgelegte Temperaturänderung ab, bis der maximal aktuell einstellte Ventilhub $H_{max}$ dem Sollwert $H_W$ entsprechend 90% beträgt.

Eine Erhöhung der Vorlauftemperatur $T_{VL}$ wird hingegen bei einer Überschreitung des Sollwerts $H_W$ vorgenommen, indem ein entsprechend höherer Sollwert $T_{VL,W}$ der Vorlauftemperatur erzeugt wird. Somit ist die zentrale Regeleinrichtung Z konfiguriert, anhand der Vorlauftemperatur $T_{VL}$ auf einen maximalen Ventilhub zu regeln. Hierdurch kann zum einen die Vorlauftemperatur $T_{VL}$ auf einen möglichst kleinen Wert eingestellt werden und andererseits ein möglichst großer Volumenstrom erreicht werden. Der Sollwert $T_{VL,W}$ der Vorlauftemperatur wird üblicherweise wie in Fig. 4 angedeutet anhand einer Heizkennlinie bestimmt. Das beschriebene Verfahren kann somit insbesondere eine Korrektur der aus der Heizkennlinie ermittelten Vorlaufsolltemperatur $T_{VL,W}$ bestimmen. Die aus der Heizkennlinie ermittelte Vorlaufsolltemperatur $T_{VL,W}$ wird dann mit dem von der zentralen Regeleinrichtung Z ermittelten Korrekturwert addiert.

Bei der beschriebenen Optimierung der Vorlauftemperatur $T_{VL}$ kann der Sollwert $T_{VL,W}$ der Vorlauftemperatur so vorgegeben werden, dass sich im Referenzraum ein Ventilhub entsprechend dem vorgegebenen Sollwert $H_W$ einstellt. Dabei ist zu berücksichtigen, dass die zentrale Regeleinrichtung Z die Vorlauftemperatur $T_{VL}$ beeinflusst, während der Ventilhub lokal vom Raumtemperaturregler der jeweiligen Einstelleinrichtung E1...En oder der zentralen Regeleinrichtung Z geregelt wird.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

**Bezugszeichenliste**

**1**  Heizungsanlage
**R1**  erster Raum

R2    zweiter Raum
**WE**    Wärmeerzeuger
**VL**    Vorlauf
**RL**    Rücklauf
**HK1**    erster Heizkörper
**HK2**    zweiter Heizkörper
**V1**    erstes Ventil (Stellglied)
**V2**    zweites Ventil (Stellglied)
**P**    Pumpe
**E1**    erste Einstelleinrichtung
**E2**    zweite Einstelleinrichtung
**Z**    zentrale Regeleinrichtung

**Patentansprüche**

1. Verfahren zum Betreiben einer Heizungsanlage (1) in einem Gebäude mit mindestens einem beheizbaren Raum (R1), wobei die Heizungsanlage (1) umfasst:

   - mindestens einen Heizkörper (HK1) in jedem beheizbaren Raum (R1), wobei der mindestens eine Heizkörper (HK1) ein Stellglied (V1) zum Einstellen eines Volumenstroms durch den Heizkörper (HK1) umfasst;
   - einen Wärmeerzeuger (WE) zum Erhitzen eines Trägermediums, das über
   - einen Vorlauf (VL) zu
   - dem mindestens einen Heizkörper (HK1) fließt und über
   - einen Rücklauf (RL) zurück zum Wärmeerzeuger (WE) fließt;
   - eine im Vorlauf (VL) oder Rücklauf (RL) angeordnete Pumpe (P) zum Fördern des Trägermediums;
   - einen im Vorlauf (VL) angeordneten Temperatursensor zum Ermitteln einer Vorlauftemperatur ($T_{VL}$) des Trägermediums;
   - einen in dem mindestens einen beheizbaren Raum (R1) angeordneten Temperatursensor zum Ermitteln einer Raumisttemperatur ($T_R$) des Raumes (R1);
   - eine Regeleinrichtung (Z) die den Wärmeerzeuger (WE) regelt oder steuert, um die Vorlauftemperatur ($T_{VL}$) des Trägermediums auf eine vorgegebene Vorlaufsolltemperatur ($T_{VL,W}$) einzustellen; und
   - einen Raumtemperaturregler zum Regeln der Raumtemperatur durch Einstellen einer Stellgliedöffnung ($H_{akt}$) des Stellglieds (V1) in Abhängigkeit einer jeweils vorgegebenen Raumsolltemperatur ($T_{R,W}$) und der ermittelten Raumisttemperatur ($T_R$),

   wobei das Verfahren die folgenden Schritte umfasst:

   - Erfassen einer aktuellen Stellgliedöffnung ($H_{akt}$) des Stellglieds (V1) des mindestens einen Heizkörpers (HK1); und
   - Bestimmen der Vorlaufsolltemperatur ($T_{VL,W}$) in Abhängigkeit der aktuellen Stellgliedöffnung ($H_{akt}$) des Stellglieds (V1) des mindestens einen Heizkörpers (HK1),

   **dadurch gekennzeichnet, dass** das Verfahren ferner umfasst:

   - Bestimmen eines Satzes von Regelparametern ($K_p$, $K_i$) zum Betreiben des Raumtemperaturreglers in Abhängigkeit der aktuellen Stellgliedöffnung ($H_{akt}$) des Stellglieds (V1).

2. Verfahren nach Anspruch 1, wobei das Gebäude mindestens zwei beheizbare Räume (R1, R2) mit jeweils mindestens einem Heizkörper (HK1, HK2) aufweist, wobei das Verfahren ferner umfasst:

   - Erfassen aller aktuell eingestellten Stellgliedöffnungen ($H_{akt}$) und Ermitteln einer maximalen aktuell eingestellten Stellgliedöffnung ($H_{max}$); und
   - Bestimmen der Vorlaufsolltemperatur ($T_{VL,W}$) in Abhängigkeit der maximalen aktuell eingestellten Stellgliedöffnung ($H_{max}$),

   wobei der Satz von Regelparametern ($K_p$, $K_i$) für jeden Raumtemperaturregler jeweils in Abhängigkeit der aktuellen Stellgliedöffnung ($H_{akt}$) bestimmt wird.

3. Verfahren nach Anspruch 2, wobei:

   - die Vorlaufsolltemperatur ($T_{VL,W}$) abgesenkt wird, falls die maximale aktuell eingestellte Stellgliedöffnung ($H_{max}$) kleiner als ein vorgegebener Sollwert ($H_W$) für die maximale Stellgliedöffnung ist oder
   - die Vorlaufsolltemperatur ($T_{VL,W}$) erhöht wird, falls die maximale aktuell eingestellte Stellgliedöffnung ($H_{max}$) größer als der vorgegebene Sollwert ($H_W$) für die maximale Stellgliedöffnung ist.

4. Verfahren nach Anspruch 2 oder 3, wobei der Satz von Regelparametern ($K_p$, $K_i$) zum Betreiben der Raumtemperaturregler der Stellglieder (V1, V2) mit einer aktuellen Stellgliedöffnung ($H_{akt}$) kleiner als die maximale aktuell eingestellte Stellgliedöffnung ($H_{max}$) jeweils in Abhängigkeit der aktuellen Stellgliedöffnung ($H_{akt}$) und der maximalen aktuell eingestellten Stellgliedöffnung ($H_{max}$) bestimmt wird, falls eine festgelegte Bedingung erfüllt ist.

5. Verfahren nach Anspruch 4, wobei als Bedingung festgelegt ist, dass sich die maximale Stellgliedöffnung ($H_{max}$) innerhalb eines festgelegten Zeitintervalls ($\Delta t$) um einen festgelegten Betrag verringert hat.

6. Verfahren nach Anspruch 4, wobei als Bedingung festgelegt ist, dass die Raumisttemperatur ($T_R$) im Raum mit der maximalen aktuell eingestellten Stellgliedöffnung ($H_{max}$) größer als die Raumsolltemperatur ($T_{R,W}$) ist.

7. Heizungsanlage (1) für ein Gebäude mit mindestens einem beheizbaren Raum (R1), wobei die Heizungsanlage (1) umfasst:

   - mindestens einen Heizkörper (HK1) für jeden beheizbaren Raum (R1), wobei der mindestens eine Heizkörper (HK1) ein Stellglied (V1) zum Einstellen eines Volumenstroms durch den Heizkörper (HK1) umfasst;
   - einen Wärmeerzeuger (WE) zum Erhitzen eines Trägermediums, das über
   - einen Vorlauf (VL) zu
   - dem mindestens einen Heizkörper (HK1) fließt und über
   - einen Rücklauf (RL) zurück zum Wärmeerzeuger (WE) fließt;
   - eine im Vorlauf (VL) oder Rücklauf (RL) angeordnete Pumpe (P) zum Fördern des Trägermediums;
   - einen im Vorlauf (VL) angeordneten Temperatursensor zum Ermitteln einer Vorlauftemperatur ($T_{VL}$) des Trägermediums;
   - einen in dem mindestens einen beheizbaren Raum (R1) angeordneten Temperatursensor zum Ermitteln einer Raumisttemperatur ($T_R$) des Raumes (R1);
   - eine Regeleinrichtung (Z) die konfiguriert ist, den Wärmeerzeuger (WE) zu regeln oder zu steuern, um die Vorlauftemperatur ($T_{VL}$) des Trägermediums auf eine vorgegebene Vorlaufsolltemperatur ($T_{VL,W}$) einzustellen; und
   - einen Raumtemperaturregler zum Regeln der Raumtemperatur durch Einstellen einer Stellgliedöffnung ($H_{akt}$) des Stellglieds (V1) in Abhängigkeit einer jeweils vorgegebenen Raumsolltemperatur ($T_{R,W}$) und der ermittelten Raumisttemperatur ($T_R$),

   wobei die zentrale Regeleinrichtung (Z) konfiguriert ist:

   - eine aktuelle Stellgliedöffnung ($H_{akt}$) des Stellglieds (V1) des mindestens einen Heizkörpers (HK1) zu erfassen; und
   - die Vorlaufsolltemperatur ($T_{VL,W}$) in Abhängigkeit der aktuellen Stellgliedöffnung ($H_{akt}$) des Stellglieds (V1) des mindestens einen Heizkörpers (HK1) zu bestimmen,

   **dadurch gekennzeichnet, dass** die zentrale Regeleinrichtung (Z) ferner konfiguriert ist

   - einen Satz von Regelparametern ($K_p$, $K_i$) zum Betreiben des Raumtemperaturreglers in Abhängigkeit der aktuellen Stellgliedöffnung ($H_{akt}$) des Stellglieds (V1) zu bestimmen.

8. Heizungsanlage nach Anspruch 7, wobei die Heizungsanlage mindestens zwei Heizkörper (HK1, HK2) für mindestens zwei beheizbare Räume (R1, R2) des Gebäudes aufweist, wobei die zentrale Regeleinrichtung (Z) ferner konfiguriert ist:

   - alle aktuell eingestellten Stellgliedöffnungen ($H_{akt}$) zu erfassen und eine maximale aktuell eingestellte Stellgliedöffnung ($H_{max}$) zu ermitteln;
   - die Vorlaufsolltemperatur ($T_{VL,W}$) in Abhängigkeit der maximalen aktuell eingestellten Stellgliedöffnung ($H_{max}$)

zu bestimmen; und
- den Satz von Regelparametern ($K_p$, $K_i$) für jeden Raumtemperaturregler jeweils in Abhängigkeit der aktuellen Stellgliedöffnung ($H_{akt}$) zu bestimmen.

9. Heizungsanlage nach Anspruch 8, wobei die zentrale Regeleinrichtung (Z) ferner konfiguriert ist:

- die Vorlaufsolltemperatur ($T_{VL,W}$) abzusenken, falls die maximale aktuell eingestellte Stellgliedöffnung ($H_{max}$) kleiner als ein vorgegebener Sollwert ($H_W$) für die maximale Stellgliedöffnung ist oder
- die Vorlaufsolltemperatur ($T_{VL,W}$) zu erhöhen, falls die maximale aktuell eingestellte Stellgliedöffnung ($H_{max}$) größer als der vorgegebene Sollwert ($H_W$) für die maximale Stellgliedöffnung ist.

10. Heizungsanlage nach Anspruch 8 oder 9, wobei zentrale Regeleinrichtung (Z) ferner konfiguriert ist, den Satz von Regelparametern ($K_p$, $K_i$) zum Betreiben der Raumtemperaturregler der Stellglieder (V1, V2) mit einer aktuellen Stellgliedöffnung ($H_{akt}$) kleiner als die maximale aktuell eingestellte Stellgliedöffnung ($H_{max}$) jeweils in Abhängigkeit der aktuellen Stellgliedöffnung ($H_{akt}$) und der maximalen aktuell eingestellten Stellgliedöffnung ($H_{max}$) zu bestimmen, falls eine festgelegte Bedingung erfüllt ist.

**Claims**

1. A method for operating a heating system (1) in a building with at least one heatable room (R1), said heating system (1) comprising:

- at least one radiator (HK1) in each heatable room (R1), said at least one radiator (HK1) comprising an actuator (V1) for setting a volumetric flow through the radiator (HK1);
- a heat generator (WE) for heating a carrier medium that flows via
- a supply (VL) to
- said at least one radiator (HK) and flows via
- a return (RL) back to said heat generator (WE);
- a pump (P) arranged in said supply (VL) or return (RL) for pumping the carrier medium;
- a temperature sensor arranged in said supply (VL) for determining a supply temperature ($T_{VL}$) of the carrier medium;
- a temperature sensor arranged in the at least one heatable room (R1) for determining an actual room temperature ($T_R$) of the room (R1);
- a control device (Z) regulating or controlling said heat generator (WE) in order to adjust the supply temperature ($T_{VL}$) of the carrier medium to a predetermined supply target temperature ($T_{VL,W}$); and
- a room temperature controller for controlling the room temperature by adjusting an actuator opening ($H_{akt}$) of said actuator (V1) as a function of a predetermined target room temperature ($T_{R,W}$) and the determined actual room temperature ($T_R$),

said method comprising the steps of:

- detecting a current actuator opening ($H_{akt}$) of said actuator (V1) of the at least one radiator (HK1);
- determining the target supply temperature ($T_{VL,W}$) as a function of the current actuator opening ($H_{akt}$) of said actuator (V1) of the at least one radiator (HK1);

**characterized in that** said method further comprises:

- determining a set of control parameters ($K_p$, $K_i$) for operating the room temperature controller as a function of the current actuator opening ($H_{akt}$) of said actuator (V1).

2. The method according to claim 1, wherein said building has at least two heatable rooms (R1, R2), each with at least one radiator (HK1, HK2), said method further comprising:

- detecting all currently set actuator openings ($H_{akt}$) and determining a maximum currently set actuator opening ($H_{max}$); and
- determining the target supply temperature ($T_{VL,W}$) depending on the maximum currently set actuator opening ($H_{max}$),

wherein the set of control parameters ($K_p$, $K_i$) is determined for each room temperature controller as a function of the current actuator opening ($H_{akt}$).

3. The method according to claim 2, wherein:

   - the target supply temperature ($T_{VL,W}$) is decreased if the maximum currently set actuator opening ($H_{max}$) is less than a predetermined target value ($H_W$) for the maximum actuator opening or
   - the target supply temperature ($T_{VL,W}$) is increased if the maximum currently set actuator opening ($H_{max}$) is greater than the predetermined target value ($H_W$) for the maximum actuator opening.

4. The method according to claim 2 or 3, wherein the set of control parameters ($K_p$, $K_i$) for operating the room temperature controllers of said actuators (V1, V2) having a current actuator opening ($H_{akt}$) less than the maximum currently set actuator opening ($H_{max}$) is determined as a function of the current actuator opening ($H_{akt}$) and the maximum currently set actuator opening ($H_{max}$) if a specified condition is met.

5. The method according to Claim 4, wherein the specified condition is that the maximum actuator opening ($H_{max}$) has decreased by a specified amount within a specified time interval ($\Delta t$).

6. The method according to Claim 4, wherein the specified condition is that the actual room temperature ($T_R$) in the room with the maximum currently set actuator opening ($H_{max}$) is greater than the target room temperature ($T_{R,W}$).

7. A heating system (1) in a building with at least one heatable room (R1), said heating system (1) comprising:

   - at least one radiator (HK1) in each heatable room (R1), said at least one radiator (HK1) comprising an actuator (V1) for setting a volumetric flow through the radiator (HK1);
   - a heat generator (WE) for heating a carrier medium that flows via
   - a supply (VL) to
   - said at least one radiator (HK) and flows via
   - a return (RL) back to said heat generator (WE);
   - a pump (P) arranged in said supply (VL) or return (RL) for pumping the carrier medium;
   - a temperature sensor arranged in said supply (VL) for determining a supply temperature ($T_{VL}$) of the carrier medium;
   - a temperature sensor arranged in the at least one heatable room (R1) for determining an actual room temperature ($T_R$) of the room (R1);
   - a control device (Z) configured to regulate or control said heat generator (WE) in order to adjust the supply temperature ($T_{VL}$) of the carrier medium to a predetermined supply target temperature ($T_{VL,W}$); and
   - a room temperature controller for controlling the room temperature by adjusting an actuator opening ($H_{akt}$) of said actuator (V1) as a function of a predetermined target room temperature ($T_{R,W}$) and the determined actual room temperature ($T_R$),

   wherein said central control device (Z) is configured to:

   - detect a current actuator opening ($H_{akt}$) of said actuator (V1) of the at least one radiator (HK1);
   - determine the target supply temperature ($T_{VL,W}$) as a function of the current actuator opening ($H_{akt}$) of said actuator (V1) of the at least one radiator (HK1);

   **characterized in that** said central control device (Z) is further configured to:

   - determine a set of control parameters ($K_p$, $K_i$) for operating the room temperature controller as a function of the current actuator opening ($H_{akt}$) of said actuator (V1).

8. The heating system according to claim 7, wherein said heating system has at least two radiators (HK1, HK2) for at least two heatable rooms (R1, R2) of said building, wherein said central control device (Z) is further configured to:

   - detect all currently set actuator openings ($H_{akt}$) and determine a maximum currently set actuator opening ($H_{max}$); and
   - determine the target supply temperature ($T_{VL,W}$) depending on the maximum currently set actuator opening ($H_{max}$),

- determine the set of control parameters ($K_p$, $K_i$) for each room temperature controller as a function of the current actuator opening ($H_{akt}$), respectively.

9. The heating system according to claim 8, wherein said central control device (Z) is further configured to:

- decrease the target supply temperature ($T_{VL,W}$) if the maximum currently set actuator opening ($H_{max}$) is less than a predetermined target value ($H_W$) for the maximum actuator opening, or
- increase the target supply temperature ($T_{VL,W}$) if the maximum currently set actuator opening ($H_{max}$) is greater than the predetermined target value ($H_W$) for the maximum actuator opening.

10. The heating system according to claim 8 or 9, wherein said central control device (Z) is further configured to determine the set of control parameters ($K_p$, $K_i$) for operating the room temperature controllers of said actuators (V1, V2) having a current actuator opening ($H_{akt}$) less than the maximum currently set actuator opening ($H_{max}$) as a function of the current actuator opening ($H_{akt}$) and the maximum currently set actuator opening ($H_{max}$), respectively, if a specified condition is met.

**Revendications**

1. Procédé pour faire fonctionner une installation de chauffage (1) dans un bâtiment avec au moins une pièce (R1) pouvant être chauffée, dans lequel l'installation de chauffage (1) comprend :

- au moins un corps de chauffe (HK1) dans chaque pièce (R1) pouvant être chauffée, dans lequel le au moins un corps de chauffe (HK1) comprend un élément de réglage (V1) pour le réglage d'un débit volumique à travers le corps de chauffe (HK1) ;
- un générateur de chaleur (WE) pour chauffer un fluide porteur, qui s'écoule par l'intermédiaire
- d'une canalisation aller (VL) vers
- le au moins un corps de chauffe (HK1) et s'écoule en retour par l'intermédiaire
- d'une canalisation retour (RL) vers le générateur de chaleur (WE) ;
- une pompe (P) disposée dans la canalisation aller (VL) ou canalisation retour (RL) pour refouler le fluide porteur ;
- un capteur de température disposé dans la canalisation aller (VL) pour déterminer une température aller ($T_{VL}$) du fluide porteur ;
- un capteur de température disposé dans la au moins une pièce (R1) pouvant être chauffée pour déterminer une température réelle de pièce ($T_R$) de la pièce (R1) ;
- un dispositif de régulation (Z) qui régule ou commande le générateur de chaleur (WE), afin de régler la température aller ($T_{VL}$) du fluide porteur sur une température théorique aller ($T_{VL,W}$) prédéfinie ; et
- un régulateur de température de pièce pour réguler la température de pièce par réglage d'une ouverture d'élément de réglage ($H_{akt}$) de l'élément de réglage (V1) en fonction d'une température théorique de pièce ($T_{R,W}$) respectivement prédéfinie et de la température réelle de pièce ($T_R$) déterminée,

dans lequel le procédé comprend les étapes suivantes :

- la détection d'une ouverture d'élément de réglage ($H_{akt}$) actuelle de l'élément de réglage (V1) du au moins un corps de chauffe (HK1) ; et
- la définition de la température théorique aller ($T_{VL,W}$) en fonction de l'ouverture d'élément de réglage ($H_{akt}$) actuelle de l'élément de réglage (V1) du au moins un corps de chauffe (HK1),

**caractérisé en ce que** le procédé comprend en outre :

- la définition d'un ensemble de paramètres de régulation ($K_p$, $K_i$) pour faire fonctionner le régulateur de température de pièce en fonction de l'ouverture d'élément de réglage ($H_{akt}$) actuelle de l'élément de réglage (V1).

2. Procédé selon la revendication 1, dans lequel le bâtiment présente au moins deux pièces (R1, R2) pouvant être chauffées avec respectivement au moins un corps de chauffe (HK1, HK2), dans lequel le procédé comprend en outre :

- la détection de toutes les ouvertures d'élément de réglage ($H_{akt}$) actuellement réglées et la détermination d'une ouverture d'élément de réglage maximale ($H_{max}$) actuellement réglée ; et
- la définition de la température théorique aller ($T_{VL,W}$) en fonction de l'ouverture d'élément de réglage maximale

($H_{max}$) actuellement réglée,

dans lequel l'ensemble de paramètres de régulation ($K_p$, $K_i$) pour chaque régulateur de température de pièce est défini respectivement en fonction de l'ouverture d'élément de réglage ($H_{akt}$) actuelle.

**3.** Procédé selon la revendication 2, dans lequel :

- la température théorique aller ($T_{VL,W}$) est abaissée, au cas où l'ouverture d'élément de réglage maximale ($H_{max}$) actuellement réglée serait inférieure à une valeur théorique ($H_W$) prédéfinie pour l'ouverture d'élément de réglage maximale ou
- la température théorique aller ($T_{VL,W}$) est augmentée, au cas où l'ouverture d'élément de réglage maximale ($H_{max}$) actuellement réglée serait supérieure à la valeur théorique ($H_W$) prédéfinie pour l'ouverture d'élément de réglage maximale.

**4.** Procédé selon la revendication 2 ou 3, dans lequel l'ensemble de paramètres de régulation ($K_p$, $K_i$) pour faire fonctionner les régulateurs de température de pièce des éléments de réglage (V1, V2) avec une ouverture d'élément de réglage ($H_{akt}$) actuelle inférieure à l'ouverture d'élément de réglage maximale ($H_{max}$) actuellement réglée est défini respectivement en fonction de l'ouverture d'élément de réglage ($H_{akt}$) actuelle et de l'ouverture d'élément de réglage maximale ($H_{max}$) actuellement réglée, au cas où une condition fixée serait remplie.

**5.** Procédé selon la revendication 4, dans lequel il est fixé comme condition que l'ouverture d'élément de réglage maximale ($H_{max}$) actuellement réglée ait diminué à l'intérieur d'un intervalle de temps ($\Delta t$) fixé d'une valeur fixée.

**6.** Procédé selon la revendication 4, dans lequel il est fixé comme condition que la température réelle de pièce ($T_R$) dans la pièce avec l'ouverture d'élément de réglage maximale ($H_{max}$) actuellement réglée soit plus grande que la température théorique de pièce ($T_{R,W}$).

**7.** Installation de chauffage (1) pour un bâtiment avec au moins une pièce (R1) pouvant être chauffée, dans laquelle l'installation de chauffage (1) comprend :

- au moins un corps de chauffe (HK1) pour chaque pièce (R1) pouvant être chauffée, dans laquelle le au moins un corps de chauffe (HK1) comprend un élément de réglage (V1) pour le réglage d'un débit volumique à travers le corps de chauffe (HK1) ;
- un générateur de chaleur (WE) pour chauffer un fluide porteur, qui s'écoule par l'intermédiaire
- d'une canalisation aller (VL) vers
- le au moins un corps de chauffe (HK1) et s'écoule en retour par l'intermédiaire
- d'une canalisation retour (RL) vers le générateur de chaleur (WE) ;
- une pompe (P) disposée dans la canalisation aller (VL) ou canalisation retour (RL) pour refouler le fluide porteur ;
- un capteur de température disposé dans la canalisation aller (VL) pour déterminer une température aller ($T_{VL}$) du fluide porteur ;
- un capteur de température disposé dans la au moins une pièce (R1) pouvant être chauffée pour déterminer une température réelle de pièce ($T_R$) de la pièce (R1) ;
- un dispositif de régulation (Z) qui est configuré pour réguler ou pour commander le générateur de chaleur (WE), afin de régler la température aller ($T_{VL}$) du fluide porteur sur une température théorique aller ($T_{VL,W}$) prédéfinie ; et
- un régulateur de température de pièce pour réguler la température de pièce par réglage d'une ouverture d'élément de réglage ($H_{akt}$) de l'élément de réglage (V1) en fonction d'une température théorique de pièce ($T_{R,W}$) respectivement prédéfinie et de la température réelle de pièce ($T_R$) déterminée,

dans laquelle le dispositif de régulation central (Z) est configuré :

- pour détecter une ouverture d'élément de réglage ($H_{akt}$) actuelle de l'élément de réglage (V1) du au moins un corps de chauffe (HK1) ; et
- pour définir la température théorique aller ($T_{VL,W}$) en fonction de l'ouverture d'élément de réglage ($H_{akt}$) actuelle de l'élément de réglage (V1) du au moins un corps de chauffe (HK1),

**caractérisé en ce que** le dispositif de régulation central (Z) est configuré en outre

- pour définir un ensemble de paramètres de régulation ($K_p$, $K_i$) pour faire fonctionner le régulateur de température de pièce en fonction de l'ouverture d'élément de réglage ($H_{akt}$) actuelle de l'élément de réglage (V1).

8. Installation de chauffage selon la revendication 7, dans laquelle l'installation de chauffage présente au moins deux corps de chauffe (HK1, HK2) pour au moins deux pièces (R1, R1) pouvant être chauffées du bâtiment, dans laquelle le dispositif de régulation central (Z) est configuré en outre :

   - pour détecter toutes les ouvertures d'élément de réglage ($H_{akt}$) actuellement réglées et pour déterminer une ouverture d'élément de réglage maximale ($H_{max}$) actuellement réglée ;
   - pour définir la température théorique aller ($T_{VL,W}$) en fonction de l'ouverture d'élément de réglage maximale ($H_{max}$) actuellement réglée ; et
   - pour définir l'ensemble de paramètres de régulation ($K_p$, $K_i$) pour chaque régulateur de température de pièce respectivement en fonction de l'ouverture d'élément de réglage ($H_{akt}$) actuelle.

9. Installation de chauffage selon la revendication 8, dans laquelle le dispositif de régulation central (Z) est configuré en outre :

   - pour abaisser la température théorique aller ($T_{VL,W}$), au cas où l'ouverture d'élément de réglage maximale ($H_{max}$) actuellement réglée serait inférieure à une valeur théorique ($H_W$) prédéfinie pour l'ouverture d'élément de réglage maximale ou
   - pour augmenter la température théorique aller ($T_{VL,W}$), au cas où l'ouverture d'élément de réglage maximale ($H_{max}$) actuellement réglée serait supérieure à la valeur théorique ($H_W$) prédéfinie pour l'ouverture d'élément de réglage maximale.

10. Installation de chauffage selon la revendication 8 ou 9, dans laquelle le dispositif de régulation central (Z) est configuré en outre pour définir l'ensemble de paramètres de régulation ($K_p$, $K_i$) pour faire fonctionner les régulateurs de température de pièce des éléments de réglage (V1, V2) avec une ouverture d'élément de réglage ($H_{akt}$) actuelle inférieure à l'ouverture d'élément de réglage maximale ($H_{max}$) actuellement réglée respectivement en fonction de l'ouverture d'élément de réglage ($H_{akt}$) actuelle et de l'ouverture d'élément de réglage maximale ($H_{max}$) actuellement réglée, au cas où une condition fixée serait remplie.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0864955 A1
- WO 03052536 A2
- DE 10044734 A1
- DE 102017203850